# EUROPÄISCHE PATENTSCHRIFT

(11) **EP 3 451 021 B1**
(45) Veröffentlichungstag und Bekanntmachung des Hinweises auf die Patenterteilung: **01.01.2025**
(21) Anmeldenummer: 17188481.0
(22) Anmeldetag: 30.08.2017
(51) Int. Cl.: G01S 17/42, G01S 17/10, G01S 7/4863, G01S 7/497, G01S 7/481

(54) **MESSGERÄT MIT SCANFUNKTIONALITÄT UND EINSTELLBAREN EMPFANGSBEREICHEN DES EMPFÄNGERS**
MEASURING DEVICE WITH SCAN FUNCTIONALITY AND ADJUSTABLE RECEIVING AREAS OF THE RECEIVER
APPAREIL DE MESURE POURVU DE FONCTION DE BALAYAGE ET DE ZONES DE RÉCEPTION RÉGLABLES DU RÉCEPTEUR

(43) Veröffentlichungstag der Anmeldung: 06.03.2019
(73) Patentinhaber: Hexagon Technology Center GmbH, 9435 Heerbrugg (CH)
(72) Erfinder: MAYER, Tim, 9443 Widnau (CH); HINDERLING, Jürg, 9437 Marbach (CH)
(74) Vertreter: Kaminski Harmann

(56) Entgegenhaltungen:
- EP-A1- 3 182 159
- WO-A1-2017/112416

## Beschreibung

Die Erfindung bezieht sich auf ein Messgerät mit Scanfunktionalität zur optischen Vermessung einer Umgebung.

Zur Erfassung von Objekten oder Oberflächen in einer Umgebung werden häufig Verfahren verwendet, welche ein Abtasten mittels eines Laserscanners durchführen. Dabei wird jeweils die räumliche Position eines Oberflächenpunktes erfasst, indem durch den Laser die Entfernung zum angezielten Oberflächenpunkt gemessen und diese Messung mit Winkelinformationen der Laseremission verknüpft wird. Aus diesen Entfernungs- und Winkelinformationen kann die räumliche Lage des erfassten Punktes bestimmt und beispielsweise eine Oberfläche fortlaufend vermessen werden. Oft wird parallel zu dieser rein geometrischen Erfassung der Oberfläche auch noch eine Bildaufnahme durch eine Kamera durchgeführt, welche neben der visuellen Gesamtansicht auch weitere Informationen, z.B. bezüglich der Oberflächentextur, bereitstellt.

3D-Scannen ist eine sehr wirkungsvolle Technologie um innerhalb von Minuten oder Sekunden Millionen von Einzelmessdaten, insbesondere 3D-Koordinaten, zu produzieren. Typische Messaufgaben sind die Aufnahme von Objekten bzw. deren Oberflächen wie Industrieanlagen, Häuserfassaden oder historischen Gebäuden, aber auch von Unfallorten und Verbrechensszenen. Vermessungsgeräte mit Scanfunktionalität sind beispielsweise Totalstationen oder Theodoliten, welche verwendet werden, um 3D-Koordinaten von Oberflächen zu messen bzw. zu erstellen. Zu diesem Zweck müssen sie in der Lage sein, den Messstrahl - meist ein Laserstrahl - einer Entfernungsmessvorrichtung über eine Oberfläche oder entlang einer Kante zu führen und damit bei einer vorgegebenen Abtast- oder Messrate sukzessive zu verschiedenen Messrichtungen gleichzeitig Richtung und Entfernung zu den jeweiligen Messpunkten zu erfassen. Richtung und Entfernung sind dabei bezogen auf einen Messbezugspunkt wie z.B. der Standort oder Nullpunkt des Vermessungsgeräts, liegen mit anderen Worten in einem gemeinsamen Bezugs- oder Koordinatensystem, so dass also die einzelnen Messrichtungen und damit die Einzelmessdaten über das lokale Koordinatensystem miteinander verknüpft sind. Aus dem Entfernungsmesswert und der damit korrelierten Messrichtung für jeden Punkt kann somit anschliessend, beispielsweise mittels einer integrierten oder externen Datenverarbeitungsanlage aus der Vielzahl der gescannten Punkte eine sogenannte 3D-Punktwolke generiert werden.

Messgeräte mit Scanfunktionalität werden zudem beispielsweise als LiDAR-Systeme verwendet, beispielsweise zur luftgestützten Landschaftsvermessung. Dabei werden Laserpulse aus einem sich bewegenden Träger, insbesondere ein Flugzeug oder eine Drohne (UAV, "unmanned aerial vehicle"), über ein rasch einstellbares Ablenkelement, z.B. ein Scanspiegel ("sweeping mirror") oder ein brechendes Optikbauteil, gemäss eines definierten Abtastrasters zur Oberfläche gesendet. Basierend auf zurückkommenden Teilen der zur Oberfläche ausgesandten Strahlung und der Eigenbewegung des Trägers, beispielsweise erfasst mittels eines globalen Satellitenpositioniersystems (GSNS, "global navigation satellite system") und/oder mittels eines Trägheitsmesssystems (IMU, "inertial measuring unit"), kann somit ein genaues Oberflächenmodell der zu vermessenden Oberfläche abgeleitet werden.

Weitere Messaufgaben von scannenden Messgeräten liegen beispielsweise in der Überwachung einer Umgebung, beispielsweise im Rahmen eines Warn- oder Kontrollsystems für eine industrielle Fertigungsanlage, oder in der Verwendung in Fahrassistenzsystemen.

Weitere Anwendungen von scannenden Messgeräten liegen beispielsweise in der Bestimmung von Form und Fläche von Tunnelquerschnitten oder in der Volumenbestimmung von Baugruben oder Kieshaufen.

Im Bereich von autonom fahrenden Fahrzeugen werden typischerweise vorgängig die zu befahrenden Strassen erfasst und in einem Modell abgebildet. Dazu werden beispielsweise mit Scannern ausgerüstete Fahrzeuge verwendet, die die betreffende Region abtasten und kartieren. Ein dabei verwendetes LiDAR-Modul hat beispielsweise für diese Aufgabe spezialisierte Anforderungen zu erfüllen, insbesondere hinsichtlich Gesichtsfeld und Erfassungsrate. Zum Beispiel sollte das horizontale Gesichtsfeld etwa 80 Grad umfassen, wobei das erforderliche vertikale Gesichtsfeld typischerweise wesentlich kleiner ist, z.B. etwa 25 Grad. Die Erfassungsrate für die Abtastung des kompletten Gesichtsfelds liegt beispielsweise bei etwa 25 Hz.

Vom prinzipiellen Aufbau her sind derartige scannende Messgeräte beispielsweise mit einem elektro-optischen laserbasierten Entfernungsmesser ausgebildet, um eine Distanz zu einem Objektpunkt als Messpunkt zu erfassen, wobei zudem eine Messrichtungs-Ablenkeinheit vorhanden ist, um die Senderichtung des Entfernungsmessstrahls zu variieren, beispielsweise bezüglich einer oder mehrerer unabhängiger Raumrichtungen, wodurch ein räumlicher Mess- oder Abtastbereich erfasst werden kann.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel beispielsweise anhand der Laufzeit, der Form, und/oder der Phase des Pulses bestimmt werden kann. Solche Laserdistanzmesser haben sich mittlerweile in vielen Bereichen als Standardlösungen durchgesetzt.

Zur Detektion des zurückgestreuten Pulses oder einer Pulsfolge werden zumeist zwei unterschiedliche Ansätze oder eine Kombination daraus verwendet.

Bei der so genannten Schwellwertmethode wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Problematisch ist jedoch, dass bei schwachen rückgestreuten Pulsen, wie sie beispielsweise durch grössere Messdistanzen bedingt werden, eine Detektion nicht mehr möglich ist, wenn die Pulsintensität unter die Detektionsschwelle, d.h. unter den Schwellwert, fällt. Der wesentliche Nachteil dieser Schwellwertmethode liegt somit darin, dass die Amplitude des Messsignals hinreichend grösser als die Rauschamplitude von optischen und elektrischen Rauschquellen im Signalweg sein muss, um Fehldetektionen hinreichend zu minimieren, sodass für Messungen bei relativ grossen Distanzen die Schwellwertmethode nur bedingt einsatztauglich ist.

Der andere Ansatz basiert auf der Abtastung bzw. dem Sampling des rückgestreuten Pulses. Dieser Ansatz wird typischerweise bei schwachen rückgestreuten Signalen (z.B. Pulssignale) verwendet, wie sie beispielsweise durch grössere Messdistanzen bedingt werden. Diese Methode kann auch als ganzheitliche Signalerfassung betrachtet werden, wobei durch das Abtasten sowohl die gesamte Signal- als auch die wesentliche Rauschinformation erfasst werden, was zu einer Erhöhung der Messgenauigkeit führt. Ein emittiertes Signal wird detektiert, indem die von einem Detektor erfasste Strahlung abgetastet, innerhalb des abgetasteten Bereichs ein Signal identifiziert und schliesslich eine Lage des Signals zeitlich bestimmt wird. Durch die Verwendung einer Vielzahl von Abtastwerten und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

Heutzutage wird dabei mittels der Wellenformdigitalisierungsmethode ("Waveform Digitizing", WFD) häufig die gesamte Wellenform des analogen Signals der von einem Detektor erfassten Strahlung abgetastet. Nach Identifikation der Codierung des zugehörigen Sendesignals (ASK, FSK, PSK, auch Abstands- oder Intervallmodulation genannt, etc.) eines empfangenen Signals, wird beispielsweise mittels Fouriertransformation oder aus einem definierten Verlaufspunkt des abgetasteten, digitalisierten und rekonstruierten Signals, wie den Wendepunkten, den Kurvenmaxima, oder integral mittels eines aus der Zeitinterpolation bekannten Optimum Filters, sehr genau eine Signallaufzeit ("Pulslaufzeit") bestimmt.

Alternativ oder zusätzlich zur Bestimmung der Pulslaufzeit erfolgt eine (schnelle) Abtastung oft auch hinsichtlich in Amplitude, Phase, Polarisation, Wellenlänge und/oder Frequenz codierten oder modulierten Impulsen oder Impulsfolgen.

Zum Beispiel wird beim Ansatz der zeitlich sehr präzisen Abtastung bzw. dem Sampling des zurückgestreuten Signals das vom Detektor erzeugte elektrische Signal mittels eines Analog-Digital-Wandlers ("Analog-Digital-Converter", ADC) in eine digitale Signalfolge umgewandelt. Dieses digitale Signal wird anschliessend meistens in Echtzeit weiter verarbeitet. In einem ersten Schritt wird diese Signalfolge durch spezielle digitale Filter dekodiert (ASK, FSK, PSK, etc.), also erkannt, und schliesslich die Lage einer ein Zeitintervall beschreibenden Signatur innerhalb der Signalfolge bestimmt. Beispiele für zeitauflösende Signaturen sind Schwerpunkt, Sinus-Cosinus-Transformation oder beispielsweise amplitudennormierte FIR-Filter ("finite impulse response filter") mit einem von der Pulsform abgeleiteten Gewichtskoeffizientensatz. Um allfällige Distanzdrifts zu eliminieren wird eine entsprechende zeitauflösende Signatur auch mit einem internen Startsignal verglichen. Um irreversible Samplingfehler zu vermeiden, werden zusätzliche dem Fachmann bekannte digitale Signal-Transformationen angewendet.

Eine der einfachsten Modulationsarten ist die Kennzeichnung der einzelnen Impulse oder der Pulsfolgen per Abstandscodierung, wie z.B. beschrieben in der EP 1 832 897 B1. Diese wird beispielsweise zu dem Zwecke der Re-Identifizierbarkeit eingesetzt. Diese Wiedererkennung ist dann erforderlich, wenn eine Mehrdeutigkeit entsteht, welche bei der Laufzeitmessung von Impulsen durch unterschiedliche Situationen hervorgerufen werden kann, beispielsweise wenn sich zwischen Vermessungsgerät und Zielobjekt mehr als ein Impuls oder eine Impulsgruppe befindet. Insbesondere vorteilhaft ist die Pulskodierung bei Mehrstrahlsystemen bestehend aus mehreren Laserstrahlen und zugeordneten Empfangssensoren.

Die Ablenkeinheit kann in Form eines bewegten Spiegels oder alternativ auch durch andere, zur gesteuerten Winkelablenkung von optischer Strahlung geeignete Elemente, wie beispielsweise verdrehbare Prismen, bewegliche Lichtleiter, lichtbrechende optische Elemente, verformbare optische Komponenten, etc. realisiert werden. Die Messung erfolgt meist unter Bestimmung von Entfernung und Winkeln, also in Kugelkoordinaten, welche zur Darstellung und Weiterverarbeitung auch in kartesische Koordinaten transformiert werden können.

Ein scannendes Messgerät kann insbesondere zwei separate Strahlengänge für die Sendestrahlung und die Empfangsstrahlung aufweisen oder die Strahlengänge des Sendekanals und des Empfangskanals können sich zumindest teilweise überlappen. Insbesondere können die Strahlengänge also derart ausgebildet sein, dass die Ablenkeinheit lediglich auf die Sendestrahlung wirkt, d.h. dass die abbildende Wirkung des Empfangskanals im Wesentlichen unabhängig ist von der Ansteuerung eines Strahllenkelements der Ablenkeinheit, dass der Sendekanal und der Empfangskanal jeweils eine eigene, beispielsweise separat ansteuerbare, Ablenkeinheit aufweisen, oder dass eine einzelne Ablenkeinheit sowohl auf die Sendestrahlung wie auch auf die Empfangsstrahlung wirkt.

Wenn die Ablenkeinheit nur auf die Sendestrahlung wirkt, hat dies beispielsweise den Nachteil, dass durch den variierenden Einfallswinkel die Abbildungsposition der Empfangsstrahlung auf dem Empfänger variiert und deshalb eine grössere Empfängerfläche notwendig ist, als wenn beispielsweise die Abbildungsposition mittels entsprechender Optik stabilisiert wird. Durch die grössere Empfängerfläche wird jedoch auch der Hintergrundlichtanteil erhöht, was beispielsweise aufgrund von Schrotrauschen zu einem verschlechterten Signal-Rausch Verhältnis führt. Solche Messgeräte werden deshalb typischerweise eingesetzt für Messaufgaben, wo nur ein kleiner Raumwinkelbereich abgetastet werden soll, so dass die Empfängerfläche klein gehalten werden kann.

Der Hintergrundlichtanteil kann beispielsweise durch eine geeignete Wahl der Wellenlänge der Sendestrahlung und den Einbau von entsprechenden Filtern im Empfangspfad reduziert werden. Dies erhöht jedoch typischerweise die Komplexität der Lichtquelle, da diese eine definierte und stabile Wellenlänge aufweisen muss. Dies ist aufwendig, braucht besondere Stabilisierungsmassnahmen und verhindert dabei beispielsweise auch eine kompaktere Bauweise des Messgeräts.

Insbesondere für Messaufgaben, wo grössere Raumwinkelbereiche abgetastet werden sollen, ist die Ablenkeinheit deshalb oft derart angeordnet, dass durch dasselbe Strahllenkelement im Sende- und Empfangskanal oder durch jeweils separate Strahllenkelemente im Sende- und Empfangskanal die Abbildungsposition der Empfangsstrahlung auf dem Empfänger stabilisiert wird. Dadurch kann die Empfängerfläche beispielsweise bezüglich des Strahldurchmessers des mittleren Empfangsstrahls optimiert und dadurch relativ klein gehalten werden.

Insbesondere in luftgestützten LiDAR-Systemen kann die Messdistanz zur Erdoberfläche einige Kilometer (bis zu 5 km) betragen, wobei die Winkeleinstellrate der Ablenkeinheit relativ hoch ist (z.B. 200-300 rad/s). Dies führt beispielsweise dazu, dass die Einstellung der Ablenkeinheit, z.B. die Position eines einzelnen Ablenkspiegels in einem gemeinsamen Strahlengang der Sende- und Empfangsstrahlung, für ein ausgehendes Sendesignal und ein dazu korrespondierendes eingehendes Empfangssignal unterschiedlich ist.

Zum Beispiel beträgt die Laufzeit für einen sich mit Lichtgeschwindigkeit bewegenden Puls (ca. 300'000 km/s) bei einer Flughöhe von 5 km 33 µs. Mit einer Winkeleinstellrate des für den Sende- und Empfangskanal gemeinsamen Ablenkelements von 200 rad/s führt dies zu einem Anzielfehler von 6.6 mrad. Das bedeutet also, dass der Empfänger 6.6 mrad von der Position wegschaut, wo der Laserstrahl den Grund trifft. Wenn der Laserstrahl nun einen Strahldurchmesser von beispielsweise 0.2-0.5 mrad aufweist, muss das Gesichtsfeld des Empfängers - um alles vom Laserstrahl zurückkommende Licht zu sammeln - also das zehn- bis zwanzigfache des Durchmessers des Laserstrahls abdecken. Wenn der LiDAR-Scanner zudem ein komplexes zweidimensionales Abtastraster ausführen kann, erfolgt der Anzielfehler in alle Richtungen des Laserstrahls, wodurch die Gesichtsfeldanforderung für den Empfänger also nochmals verdoppelt wird.

Um den Empfänger klein zu halten und dadurch beispielsweise wiederum den Hintergrundlichtanteil zu reduzieren, sind im Stand der Technik verschiedene Verfahren bekannt, um den Anzielfehler aufgrund der endlichen Laufzeit als Funktion der Messdistanz zu kompensieren, beispielsweise mittels distanzabhängigen Ansteuerungen von aufwendigen optischen Kompensationselementen im Empfangspfad. Die einzelnen Lösungen erfordern jedoch jeweils immer einen Kompromiss hinsichtlich Geräteparametern wie beispielsweise Gerätegrösse, Systemkomplexität, Messgenauigkeit, messbarer Distanzbereich, oder Flexibilität hinsichtlich einstellbaren Abtastmustern.

Die EP 3 182 159 A1 beschreibt sowohl optische wie sensorseitige Lösungen für eine distanzabhängige Kompensation des Anzielfehlers zur Reduktion des Hintergrundlichtanteils bei der luftgestützten Entfernungsmessung.

Die Aufgabe der Erfindung besteht in der Bereitstellung eines Messverfahrens bzw. eines Messgeräts, womit die aus dem Stand der Technik bekannten Nachteile vermieden werden, insbesondere wobei schnelle und präzise Messungen über einen ausgedehnten Distanzmessbereich ermöglicht werden.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Messgerät zur optischen Vermessung einer Umgebung, aufweisend eine Strahlungsquelle zur Erzeugung einer Sendestrahlung, z.B. gepulste Lasermessstrahlung, einen Sendekanal zum Aussenden von zumindest einem Teil der Sendestrahlung, ein Strahllenkelement im Sendekanal welches konfiguriert ist zum Ablenken der Sendestrahlung und zur Einstellung einer zeitlich veränderlichen Senderichtung der Sendestrahlung aus dem Sendekanal, und einen Empfangskanal mit einem Empfänger der konfiguriert ist zum Erfassen eines Empfangssignals basierend auf mindestens einem Teil der zurückkommenden Sendestrahlung, nachfolgend Empfangsstrahlung genannt. Das Messgerät weist ferner eine Steuerelektronik auf, die konfiguriert ist zur Steuerung des Messgeräts basierend auf einem vorprogrammierten Messvorgang, sowie einen Winkelbestimmer zum Erfassen von Winkeldaten bezüglich der Senderichtung der Sendestrahlung, und eine Recheneinheit zum Ableiten von Distanzmessdaten basierend auf dem Empfangssignal. Durch den Messvorgang wird eine, insbesondere scannende Abtastung mittels der Sendestrahlung durchgeführt, basierend auf einer definierten fortlaufenden, insbesondere kontinuierlichen, Ansteuerung des Strahllenkelements zur fortlaufenden Änderung der Senderichtung der Sendestrahlung, einem fortlaufenden Aussenden der Sendestrahlung und einem fortlaufenden Erfassen des Empfangssignals, und einem Ableiten der Distanzmessdaten.

Gemäss der vorliegenden Erfindung weist der Empfänger zum Erfassen des Empfangssignals einen optoelektronischen Sensor basierend auf einer Anordnung von Mikrozellen auf, insbesondere wobei der Sensor ausgebildet ist als Anordnung von Single Photon Avalanche Photodioden, wobei der Sensor eine Vielzahl von Mikrozellen aufweist und derart konfiguriert ist, dass die Mikrozellen einzeln und/oder in Mikrozellengruppen auslesbar sind und dadurch einzeln auslesbare aktive Teilbereiche des Empfängers einstellbar sind. Auslesbar bedeutet, dass die Mikrozellen oder die Mikrozellengruppen einen Signalausgang haben, der die Bestimmung der Laufzeit in Pikosekunden oder Subpikosekunden zulässt. Im Rahmen des Messvorgangs wird die Ansteuerung des Strahllenkelements und das Erfassen des Empfangssignals derart synchronisiert, dass das Erfassen des Empfangssignals basierend auf einem aktiven Teilbereich des Empfängers erfolgt, wobei der aktive Teilbereich basierend auf den die Senderichtung der Sendestrahlung definierenden Winkeldaten und/oder basierend auf Distanzmessdaten eingestellt wird, insbesondere Distanzmessdaten bezüglich einer unmittelbar vorhergehenden Ansteuerung des Strahllenkelements.

Der Empfänger weist also gemäss der vorliegenden Erfindung eine Gesamtdetektorfläche auf, wobei eine Einstellung eines Teilbereichs der Gesamtdetektorfläche als ein aktiver Erfassungsbereich / ein aktiver Teilbereich erfolgt, wobei der aktive Erfassungsbereich bezüglich seiner Position auf der Gesamtdetektorfläche zeitlich variabel einstellbar ist, insbesondere wobei der aktive Erfassungsbereich ferner in seiner Form und/oder seinem Ausmass einstellbar ist, und wobei durch auf die Gesamtdetektorfläche auftreffende Empfangsstrahlung ein von der Einstellung des aktiven Erfassungsbereichs abhängiges Empfängersignal erzeugt wird.

Einerseits, wenn das Strahllenkelement beispielsweise nur auf die Sendestrahlung wirkt, muss typischerweise eine empfangskanalseitige separate Kompensation bereitgestellt werden hinsichtlich des durch die Bewegung des Strahllenkelements variierenden Einfallswinkels des zurückkommenden Strahls im Empfangskanal. Erfindungsgemäss erfolgt diese Kompensation also detektorseitig, basierend auf dem erfindungsgemässen Sensor und abhängig von der Senderichtung der Sendestrahlung.

Andererseits, wenn beispielsweise durch dasselbe Strahllenkelement im Sende- und Empfangskanal oder durch jeweils separate Strahllenkelemente im Sende- und Empfangskanal die Abbildungsposition der Empfangsstrahlung auf dem Empfänger stabilisiert wird, tritt aufgrund der endlichen Signallaufzeit und der Bewegung des Strahllenkelements ein Winkelunterschied zwischen der ausgehenden Sendestrahlung und der Empfangsstrahlung auf, bezüglich des jeweiligen Eintreffwinkels auf das Strahllenkelement, was zur Folge hat, dass der Empfänger distanzabhängig von der Position wegschaut, wo der Laserstrahl die angestrahlte Oberfläche trifft. Dieser von der aktuellen Distanz abhängige Offset wird durch die erfinderische Verwendung des Sensors kompensiert.

Der Sensor kann beispielsweise eine Anordnung von Single Photon Avalanche Photodioden sein. Anordnungen von Single Photon Avalanche Photodioden, auch SPAD-Anordnung oder SPAD-Arrays genannt, sind in der Regel als Matrix-Struktur auf einem Chip angeordnet. Die Anordnungen oder Chips mit einer Photoempfindlichkeit im sichtbaren und nahen infraroten Spektralbereich werden auch als SiPM (Silicon Photomultiplier) bezeichnet. Die SiPM lösen allmählich die bisher eingesetzten Photomultiplier Tubes ab, insbesondere im sichtbaren und nahen ultravioletten Spektralbereich. SiPM haben eine hohe spektrale Empfindlichkeit im sichtbaren Wellenlängenbereich. Im Stand der Technik sind beispielsweise auf Silizium basierende und in CMOS-Technologie gefertigte SPAD Arrays erhältlich, die bis in den Nahinfrarot-Bereich bis weit über 900 nm Wellenlänge sensitiv sind.

Das Besondere an diesen SPAD-Arrays ist deren hohe Verstärkung, weshalb diese bisher bei sehr schwachen optischen Signalen eingesetzt werden, wo lediglich 1 bis 50 Photonen auf den Sensor treffen. Solche, beispielsweise luftgestützten, Sensoren werden auch als SPL-LIDAR bezeichnet (SPL = "single photon lidar"). Bei nur wenigen Photonen ist das Distanzrauschen jedoch erheblich und beträgt typischerweise 10 mm bis 100 mm. Zudem wird die absolute Distanzmessgenauigkeit von der Signalstärke beeinflusst, dies insbesondere bei SPAD-Arrays mit wenigen Mikrozellen. Durch spezielle Massnahmen, beispielsweise eine Range Walk Kompensation, kann hingegen ein Distanzrauschen von weit weniger as 1 mm erreicht werden, wodurch eine Messgenauigkeit von 0.1 mm erreicht wird. Dies entspricht einer typischen Zeitauflösung von einer Pico-Sekunde oder weniger.

Kommerzielle SPAD-Arrays sind auch bei Wellenlängen zwischen 800 nm und 1800 nm erhältlich. Diese Sensoren bestehen hauptsächlich aus dem Halbleitermaterial InGaAs. Auch diese Sensoren weisen je nach Design eine externe oder interne Matrix-Struktur über die photo-sensitive Fläche auf. Distanzmesssysteme mit SPAD-Arrays in diesem Spektralbereich haben den Vorteil, dass das solare Hintergrundlicht (Tageslicht) gegenüber dem sichtbaren Wellenlängenbereich erheblich niedriger ist und dass dadurch dieser störende Lichtstrom die SPAD-Arrays weniger stört.

Das Besondere dieser SPAD-Array-Sensoren ist die sehr hohe Photoempfindlichkeit, wobei die SPAD-Arrays hauptsächlich dazu ausgelegt sind, einzelne Photonen einwandfrei detektieren zu können. Deshalb werden sie auch als "Multi Pixel Photon Counter" (MPPC) bezeichnet. Die SPAD-Arrays bestehen aus hunderten, tausenden, bis über zehntausenden von Mikrozellen und sind so in der Lage, Pulse mit tausenden oder hundertausenden von Photonen gleichzeitig zu empfangen. Zudem sind aufgrund der Parallelschaltung der vielen Mikrozellen zu Zellengruppen (Domänen) auch bei solarem Hintergrundlicht nach wie vor ausreichend freie Zellen für die Signalphotonen vorhanden.

Eine weitere Besonderheit von SPAD-Anordnungen besteht insbesondere darin, dass einzelne Mikrozellen oder einzelne Subsets von Mikrozellen gesondert angesteuert und/oder gesondert ausgelesen werden können. Die Mikrozellen können also örtlich sequentiell aktiviert werden, beispielsweise für ein zeilen- oder spaltenweises Auslesen des Empfängers (z.B. als "Rolling Shutter" oder "Rolling Frame"). Insbesondere können also von der Senderichtung abhängige einzeln auslesbare Teilbereiche des Empfängers definiert werden.

Beispielsweise können die Teilbereiche derart definiert sein, dass sie jeweils eine räumliche Abfolge von benachbarten Mikrozellen repräsentieren. Die Teilbereiche können aber auch durch jeweils beabstandete Bereiche des Empfängers definiert sein, d.h. dass die einzelnen Teilbereiche keine zusammenhängende Abfolge von Mikrozellen repräsentieren.

Insbesondere können die einzelnen Teilbereiche derart definiert sein, dass sie sich gegenseitig zumindest teilweise überlappen.

Zum Beispiel können die Teilbereiche ferner derart aufeinander abgestimmt sein, dass durch eine Abfolge von Signalerfassungen durch einzelne Teilbereiche beispielsweise alternierend einzelne Mikrozellen oder Mikrozellengruppen (Domänen) der SPAD-Anordnung zum Ausgang geleitet werden, beispielsweise alternierend gerade und ungerade Zeilen (bezüglich der SPAD-Anordnung) innerhalb der Teilbereiche. Eine solche zeitlich alternierende Aktivierung von Mikrozellen oder Mikrozellengruppen führt beispielsweise zu einer Verkürzung der Erholungszeit des SPAD-Arrays, wodurch eine schnellere Lasermodulation oder Schussrate möglich ist.

Anstatt die Mikrozellen oder Mikrozellengruppen (Domänen) der SPAD-Anordnung zu aktivieren, können diese beispielsweise in einem stationären Zustand aktiviert bleiben, um für die "Rolling Shutter" oder "Rolling Frame" Funktion die Ausgänge der Mikrozellen oder Mikrozellengruppen (Domänen) synchron zur senderseitigen Scanningbewegung zu erfassen und auszuwerten. Dabei werden mittels einer elektronischen, beispielsweise auf dem SPAD-Array integrierten, Schaltung gerade die Mikrozellen oder Mikrozellengruppen (Domänen) mit dem Signalausgang verbunden, die zeitsynchron zur der Fläche des Objekts hin ausgerichtet sind, welche vom senderseitigen Laser angestrahlt werden. Bewegt sich die Scanbewegung des Lasers in die vertikale Richtung, dann verschiebt sich die wirksame empfangsseitige Domäne synchron in dieselbe Richtung, sodass das (effektive) Gesichtsfeld (FoV, "Fieldof-View") der aktiven Empfangseinheit die Laserpunkte auf dem Objekt zeitgerecht empfangen kann. Das jeweils aktive FoV der Empfangseinheit ist im Winkelbereich so klein ausgelegt, dass die rückgestreuten Empfangspulse vollständig eingesehen und empfangen werden können und dabei möglichst wenig störendes Umgebungslicht empfangen wird.

Erfindungsgemäss werden also abhängig von der Senderichtung der Sendestrahlung richtungsabhängige aktive Teilbereiche des Empfängers definiert, um die Empfängerfläche auf eine variierende Abbildungsposition der Empfangsstrahlung abzustimmen, beispielsweise um einen Anzielfehler aufgrund der endlichen Laufzeit und einem sich schnell drehenden Ablenkspiegel als Funktion der Messdistanz zu kompensieren. Dadurch kann die jeweils genutzte Empfängerfläche bezüglich des einfallenden Empfangsstrahls optimiert werden. Zum Beispiel kann die aktive Empfangsfläche im Wesentlichen auf den Strahldurchmesser des jeweiligen Empfangsstrahls abgestimmt sein. Somit kann der Hintergrundlichtanteil auch mit einem an sich bezüglich des Strahldurchmessers überdimensionierten Empfänger für eine Einzelmessung jeweils tief gehalten werden.

Im Gegensatz zu den vergleichsweise teuren Photomultiplier-Tubes mit grossem Zeitjitter, sind die modernen SiPM-Sensoren kostengünstig und haben Zeitjitter im Pikosekunden- bis Sub-Pikosekunden-Bereich. Zudem werden die SiPM-Arrays mittels eines konventionellen CMOS-Technologieprozesses gefertigt, was zusätzlich die Integration von elektronischen Bauteilen und Schaltungen ermöglicht. Für die SPAD-Arrays aus dem Halbleitermaterial InGaAs gilt vergleichbares.

Die hohe Photoempfindlichkeit ist zurückzuführen auf den Avalanche-Mechanismus, wobei die einzelnen Mikrozellen des Arrays beispielsweise im Overvoltagebereich betrieben werden ("reverse voltage beyond the break voltage"), das heisst über der Durchbruchspannung (Breakspannung), bei welcher ein einzelnes Photon eine Lawine von Elektronen auslöst, wodurch das Signal je nach Einstellung stark verstärkt wird, z.B. eine Verstärkung bis zu einem Faktor von einer Million. Der dem Photon zugeordnete Strom ist wegen seiner Stärke leicht in ein Spannungssignal zu wandeln und ohne wesentliche Verstärkung einer Signalauswerteeinheit zuzuführen.

Ein SPAD-Array ist in der Lage mehrere Photonen gleichzeitig zu empfangen, wobei die Ströme der vielen Mikrozellen auf dem Sensorchip addiert werden können und anschliessend beispielsweise über einen Widerstand oder einen Transimpedanzverstärker in ein Spannungssignal gewandelt werden. Der SPAD-Array kann beispielsweise derart konfiguriert sein, z.B. mit mehr als zehntausend Mikrozellen, dass er sich wie ein analoger Photosensor verhält, wobei die Kennlinie beispielsweise bei schwachen Empfangssignalen annähernd proportional zur Intensität des einfallenden Laserimpulses ist.

In der Literatur wird unterschieden zwischen SPAD-Array Operationen im Linear-Modus, Geiger-Modus und SPL-Modus (SPL, "Single Photon Lidar").

Im Linear-Modus unterhalb der Durchbruchspannung tritt eine sperrspannungs- und temperaturabhängige Verstärkung auf und SPAD-Arrays können beispielsweise zum Aufbau hochempfindlicher Photoempfänger mit strahlungsleistungsproportionaler Ausgangsspannung verwendet werden.

Im Geiger-Modus und SPL-Modus, d.h. jeweils im Betrieb oberhalb der Durchbruchspannung können SPAD und SPAD-Arrays für die Einzelphotonzählung verwendet werden. Bei den SPADs erzeugt im Geiger-Modus jedes einzelne Pixel ein Ausgangssignal, wobei die Elektronenlawine durch genau ein Photon ausgelöst wird. Trifft ein Photonenpaket aus mehreren Photonen ein, so wird kein grösseres Signal gemessen, es ist daher keine Amplitudeninformation vorhanden.

Im Geiger-Modus erzeugt ein einfallendes Photonenpaket lediglich ein (binäres) Eventsignal, welches nicht proportional zur Anzahl Photonen im Photonenpaket ist.

Unter SPL-Modus versteht man einen im Geiger Mode betriebenen SPAD-Array, wo viele Mikozellen parallel zu einem Ausgangssignal geschaltet sind. Bei eintreffenden Photonenpaketen mit nur wenigen Photonen addieren sich die einzelnen Lawinen praktisch linear und die Amplitude des Ausgangssignals ist daher proportional zur Anzahl erfasster Photonen.

Die Erholungszeit der Mikrozellen nach einem photonischen Trigger ist nicht Null sondern beispielsweise zwischen 5-50 Nanosekunden, wodurch die scheinbare Empfindlichkeit des SPAD-Arrays für nachfolgend eintreffende Photonen reduziert wird. Dies hat aber beispielsweise den Vorteil, dass der Sensor einen Signalstärkenbereich mit hoher Dynamik erfassen kann. Diese Nichtlinearität ist bei SPAD-Arrays mit einer grossen Anzahl von Mikrozellen (>1000) monoton und führt einerseits zu einer Amplitudenkompression zwischen Eingangs- und Ausgangssignal, anderseits bei grösser werdendem Eingangssignal zu einem abgeschwächt zunehmendem Ausgangssignal. Interessanterweise sättigt das Ausgangssignal von SPAD-Arrays mit einer hohen Anzahl von Mikrozellen (>1000) nicht vollständig, so dass auch bei einem Empfangsimpuls mit einer sehr hohen Photonenzahl von weit über einer Million eine Amplitudenänderung messbar ist.

Ein SPAD-Array mit ausreichender Zellenzahl erfasst über einen grossen Dynamikbereich die Empfangssignalamplitude und komprimiert gewissermassen die Eingangs-Amplitude von sehr kleinen bis sehr grossen Signalen. Der SPAD Array übersteuert nie, dies auch bei sehr grossen Signalen nicht, z.B. auch dann nicht, wenn die Strahlung von einem winkelpräzisen Retroreflektor zurückgeworfen wird. Bei einer Photonenzahl von 10⁹ nähert sich das Ausgangssignal des SPAD-Arrays asymptotisch einer maximalen Grenzspannung, diese Grenzspannung ist angepasst an die nachfolgende Verstärkerschaltung und garantiert, dass die nachfolgende Elektronik bis zur Zeitmessschaltung nicht übersteuert wird. Dadurch ist eine genaue Distanzmessung über einen hohen Dynamikbereich erst möglich.

Bei der Laserdistanzmessung auf unterschiedliche Distanzen und variierende Oberflächen kann die Anzahl der Photonen beispielsweise variieren von weniger als 10 bis über 10⁹. SPAD-Arrays weisen demgegenüber einen Kompressionsfaktor der gemessenen Signalamplitude aus, der gegenüber der tatsächlichen Signalamplitude mindestens 10⁴, typischerweise 10⁸, beträgt. Mit SPAD-Arrays kann daher sowohl auf schwarze diffuse Targets als auch auf Retroreflektoren gemessen werden, ohne dass die Empfangseinheit eine Signalregelung benötigt. Durch die grosse Verstärkung weisen SPAD-Arrays zudem beispielsweise ein niedriges Rauschen auf und SPAD-Arrays mit hohem Füllfaktor zeigen ein für Distanzmessungen geeignetes Signal-Rausch-Verhältnis (SNR, "Signal-to-Noise-Ratio"). Je mehr Mikrozellen ein SPAD-Array aufweist, umso grösser ist das SNR.

Die Lasersignale eines Distanzmessers sind in der Regel mit einer Impulskodierung beaufschlagt. Typische Impulsraten sind zwischen kHz bis GHz. Experimente haben gezeigt, dass mit SPAD-Arrays bei Spannungen im Overbreakbetrieb solche Signale gut empfangen werden können. Auch Pulspakete (Bursts) sind eindeutig und beinahe rauschfrei mit SPAD-Arrays zu empfangen. Dies beispielsweise auch dann, wenn die Erholungszeit (Recovery Time) der Mikrozellen mit zehn Nanosekunden recht lang ist. Aufgrund des quasi-analogen Aufbaus von SPAD-Arrays kann auch ein beispielsweise durch Umgebungslicht präsenter Photostrom empfangen werden. Das Lasersignal ist dann dem elektrischen Photostrom des Umgebungslichts überlagert. Zum Beispiel wird der durch den Laserpuls erzeugte Stromstoss am Ausgang des SPAD-Arrays noch Hochpass gefiltert, damit die langsame hintere Signalflanke verkürzt wird. Der Ausgangsimpuls wird dadurch zu einem kurzen Signalimpuls, z.B. mit einer Pulsdauer kleiner als eine Nanosekunde. Solche kurzen Pulse mit steilen Flanken sind für eine präzise Zeit- und somit auch Distanzmessung geeignet. Die Verwendung eines Hochpassfilters (Differenzierers) hat jedoch keinen Einfluss auf die Erholungszeit des SPAD-Arrays.

Weiter wurden bereits erste Realisierungsversuche unternommen, um mehr elektronische Funktionalität in die SPAD-Arrays zu integrieren. Beispielsweise wurden bereits jeder Mikrozelle zugeordnete Zeitmesschaltungen ("TOFcircuitries"). Diese messen die Laufzeit (TOF, "Time-of-Flight"). Es existieren zum Beispiel SPAD-Array Implementierungen, wobei nahe bei den Mikrozellen eine präzise Photonenzählung integriert ist, die ohne einen nachgeschalteten Analog-Digital-Wandler (ADC, "Analog-Digital-Converter") auskommt. Zudem kann beispielsweise bei jeder Mikrozelle je eine Zeitmesschaltung (TDC, "time to digital converter") integriert sein. Als Ausgang des SPAD-Arrays wird ferner beispielsweise ein digitales Interface verwendet. Solche Bausteine sind voll digital und brauchen kein "mixed signal processing" bei der CMOS-Herstellung.

Durch den erfindungsgemässen Empfangskanal kann das Messgerät für hohe Abtastgeschwindigkeiten mittels einer schnellen Bewegung des Strahllenkelements ausgelegt sein. Empfängerseitig braucht es eine Massnahme die synchron zur senderseitigen Abtastung das Gesichtsfeld (FoV, "Field-of-View") der Empfangseinheit nachführt.

Diese Massnahme besteht beispielsweise darin, dass zu einem bestimmten Zeitpunkt lediglich eine Domäne, d.h. eine Untergruppe von Mikrozellen des SPAD-Arrays mit dem Signalausgang verbunden ist, welche genau in Richtung Lichtfleck auf dem Objekt ausgerichtet ist. Da die Lichtflecke durch das Strahllenkelement scanartig über das zu vermessende Objekt verschwenkt werden, wird die aktive Domäne des SPAD-Arrays in rein schaltungstechnischer Weise synchron über das Objekt verschwenkt. Diese aktive Domäne des SPAD-Arrays bildet das aktive Gesichtsfeld der Empfangseinheit. Dieses jeweils aktive Gesichtsfeld der Empfangseinheit ist absichtlich schmal ausgelegt, damit möglichst wenig Sonnenlicht eingefangen wird und möglichst wenige Mikrozellen der aktiven Domäne fehlgetriggert werden. Die aktivierten Teilbereiche des Empfängers bewegen sich synchronisiert mit dem Lichtfleck über die Fläche des SPAD-Arrays und zwar so, dass die aktiven Mikrozellen den Lichtfleck teilweise oder ganz einschliessen. Durch dieses elektronische Scanning, auch "solid state scanning" genannt, braucht es auf der Empfangsseite keine beweglichen Teile wie beispielsweise MEMS-Scanner, Keil-Scanner, Polygonprismenrad oder Polygonspiegelrad.

Erfindungsgemäss weist das Messgerät einen Trägheitsmesser auf der konfiguriert ist zum Erfassen von Trägheitsdaten bezüglich einer Eigenbewegung des Messgeräts, nämlich einer Verkippung (6 Freiheitsgrade, 6DoF), und wobei der im Rahmen des Messvorgangs verwendete aktive Teilbereich basierend auf den Trägheitsdaten ausgewählt wird.

Insbesondere ist das Messgerät gemäss einer Ausführungsform beispielsweise konfiguriert zum Erfassen eines zeitlichen Verlaufs der Eigenbewegung des Messgeräts, und um die Eigenbewegung des Messgeräts basierend auf dem zeitlichen Verlauf im Voraus abzuschätzen, wobei der im Rahmen des Messvorgangs verwendete aktive Teilbereich basierend auf der abgeschätzten Eigenbewegung des Messgeräts ausgewählt wird, insbesondere unter Berücksichtigung eines zeitlichen Verlaufs von initial abgeleiteten Distanzmessdaten.

Zum Beispiel können somit Vibrationen des Messgeräts kompensiert werden, beispielsweise eine Restvibration eines in einem Flugzeug kardanisch aufgehängten Messinstruments.

Die Winkeldaten bezüglich der Senderichtung der Sendestrahlung werden beispielsweise anhand von Steuersignalen für die Ansteuerung des Strahllenkelements abgeleitet und/oder basierend auf Winkelmessdaten, welche beispielsweise von einem oder mehreren im Messgerät vorhandenen Winkelmessern bereitgestellt werden.

Gemäss einer weiteren Ausführungsform ist das Messgerät konfiguriert um eine Auftreffposition der Empfangsstrahlung auf dem Sensor abzuleiten, insbesondere mittels Schwerpunktbestimmung oder Maximumbestimmung des erfassten Empfangssignals, und um basierend auf der Auftreffposition und den Distanzmessdaten eine Korrekturinformation bezüglich der Winkeldaten abzuleiten.

Zum Beispiel kann somit eine genaue Referenzierung von Distanzmessdaten für eine Erstellung einer Punktwolke erzielt werden, wobei beispielsweise auf Winkelmesser im Messgerät verzichtet werden kann. Zum Beispiel kann es somit unter Umständen ausreichen, wenn die (initial) abgeleiteten Winkeldaten lediglich auf Steuersignalen für die Ansteuerung des Strahllenkelements basieren und die initial abgeleiteten Winkeldaten für die Referenzierung in einer Punktwolke basierend auf der Auftreffposition korrigiert werden.

In einer weiteren Ausführungsform ist das Messgerät konfiguriert um basierend auf den Winkeldaten eine erste Abbildungsinformation für eine Strahlform und/oder Lage der auf dem Empfänger abgebildeten Empfangsstrahlung abzuschätzen, insbesondere basierend auf einer definierten Fixfokusoptik des Empfangskanals, wobei der im Rahmen des Messvorgangs verwendete aktive Teilbereich basierend auf der abgeschätzten ersten Abbildungsinformation ausgewählt wird.

Insbesondere kann das Messgerät gemäss einer weiteren Ausführungsform konfiguriert sein um basierend auf einem Feedback des Empfängers bezüglich eines vorgängig erfassten Empfangssignals eine zweite Abbildungsinformation für eine Strahlform und/oder Lage der auf dem Empfänger abgebildeten Empfangsstrahlung abzuschätzen, wobei der im Rahmen des Messvorgangs verwendete aktive Teilbereich basierend auf der abgeschätzten zweiten Abbildungsinformation ausgewählt wird.

Gemäss einer weiteren Ausführungsform ist das Messgerät konfiguriert, um basierend auf den Distanzmessdaten eine dritte Abbildungsinforamtion für eine Strahlform und/oder Lage der auf dem Empfänger abgebildeten Empfangsstrahlung abzuschätzen, wobei der im Rahmen des Messvorgangs verwendete aktive Teilbereich basierend auf der abgeschätzten dritten Abbildungsinformation ausgewählt wird.

In einer Ausführungsform ist der Empfangskanal derart konfiguriert, dass die abbildende Wirkung des Empfangskanals im Wesentlichen unabhängig ist von der Ansteuerung des Strahllenkelements, insbesondere wobei das Strahllenkelement derart angeordnet ist, dass es lediglich auf die Sendestrahlung wirkt. Dies bedeutet also, dass der Empfangskanal eine statische optische Achse hat, also keine optische Richtungskorrektur des einfallenden Empfangsstrahls erfolgt.

Alternativ kann der Empfangskanal gemäss einer weiteren Ausführungsform der Erfindung beispielsweise derart konfiguriert sein, dass die abbildende Wirkung des Empfangskanals abhängig ist von der Ansteuerung des Strahllenkelements, welches derart angeordnet ist, dass es auch auf die Empfangsstrahlung wirkt, so dass abhängig von der Ansteuerung des Strahllenkelements ein erster Ablenkwinkel der Sendestrahlung und ein zweiter Ablenkwinkel der Empfangsstrahlung gegeben ist. Das Messgerät ist dabei konfiguriert, um einen Winkelunterschied zwischen des ersten und zweiten Ablenkwinkels abzuschätzen, basierend auf einer Abschätzung des Zeitunterschieds zwischen dem Zeitpunkt des Passierens des Strahllenkelements durch die Sendestrahlung und dem Zeitpunkt des Passierens des Strahllenkelements durch die zugehörige Empfangsstrahlung, wobei der im Rahmen des Messvorgangs verwendete aktive Teilbereich basierend auf dem abgeschätzten Winkelunterschied eingestellt wird.

Somit kann beispielsweise ein Anzielfehler aufgrund der endlichen Laufzeit als Funktion der Messdistanz kompensiert werden, wobei gleichzeitig die Komplexität des optischen Aufbaus gering gehalten werden kann.

Insbesondere wird der Winkelunterschied dabei gemäss einer weiteren Ausführungsform abgeschätzt basierend auf mindestens einem Element aus einer Distanz zu einem Zielobjekt in der Umgebung, insbesondere basierend auf initial erfassten Distanzmessdaten, einer Einstellrate der zeitlich veränderlichen Senderichtung, einem durch den Messvorgang definierten Abtastmuster für die scannende Abtastung mittels des Strahllenkelements, und der Eigenbewegung des Messgeräts.

Zum Beispiel kann der Winkelunterschied ferner abgeschätzt werden basierend auf einer kontinuierlich erfolgenden Trendabschätzung auf Basis von bisher abgeschätzten Winkelunterschieden, insbesondere basierend auf den letzten drei unmittelbar vorhergehenden Winkelunterschieden.

Weiter kann, gemäss einer weiteren Ausführungsform, der Empfänger mehrere Sensoren aufweisen, wobei die mehreren Sensoren eindimensional oder zweidimensional zueinander angeordnet sind, insbesondere wobei jeder Sensor eine separate Ansteuerelektronik und/oder Auswerteelektronik aufweist. Oft werden bei solchen Anordnungen von Sensoren, beispielsweise SPAD-Arrays, die einzelnen Arrays als Pixel bezeichnet, obwohl jedes dieser Pixel selber aus hunderten bis zehntausenden von Mikrozellen besteht.

Ferner ist der Empfänger gemäss einer weiteren Ausführungsform derart ausgebildet, dass ein Satz von zeitlich parallel auslesbaren aktiven Teilbereichen definierbar ist, insbesondere wobei die Strahlungsquelle konfiguriert ist, ein Bündel von parallel erzeugten unterschiedlich gerichteten und/oder beabstandeter Lasermessstrahlen zu erzeugen, wobei die Teilbereiche des Satzes von aktiven Teilbereichen dabei derart definiert werden, dass sie jeweils einem Lasermessstrahl des Bündels von Lasermessstrahlen zugeordnet sind. Dadurch kann beispielsweise eine Multibeam-Abtastung mit mehreren parallelen und/oder divergierender Lasermessstrahlen erfolgen.

Gemäss einer weiteren Ausführungsform weist der Empfänger empfangsstrahlungsseitig ein für die Empfangsstrahlung strahlungsundurchlässiges Blockierelement auf, wobei das Blockierelement derart konfiguriert ist, dass ein zeitlich variabel einstellbarer Durchlassbereich zum Durchlassen der Empfangsstrahlung zur Gesamtdetektorfläche des Empfängers eingestellt wird, wobei die Position des Durchlassbereichs bezüglich der Gesamtdetektorfläche einstellbar ist, insbesondere wobei der Durchlassbereich ferner bezüglich seiner Form und/oder seinem Ausmass einstellbar ist.

Zum Beispiel kann das Blockierelement ausgebildet sein basierend auf einer zur Gesamtdetektorfläche im Wesentlichen parallel angeordneten einstellbar rotierbaren Scheibe aus für die Empfangsstrahlung strahlungsundurchlässigem Material die eine für die Empfangsstrahlung strahlungsdurchlässige Öffnung aufweist. Beispielsweise können die Öffnungen und die Rotationsgeschwindigkeiten von zwei ineinander greifenden Scheiben derart ausgebildet respektive eingestellt werden, dass der Durchlassbereich jeweils derart einstellbar ist, dass unterschiedliche Durchlassbereiche eine zweidimensionale virtuelle Bewegung über die Detektorfläche definieren.

Das erfindungsgemässe Messgerät wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a-d:: exemplarische Anwendungsgebiete für das erfinderische Messgerät, z.B. a) luftgestützte LiDAR Vermessung, b) terrestrische LiDAR oder Scanner Vermessung, c) autonom fahrendes Fahrzeug, d) Totalstation;
- Fig. 2:: schematische Illustration für eine Entstehung eines Anzielfehlers aufgrund der schnellen Bewegung eines Ablenkelements und der endlichen Laufzeit des Sendesignals;
- Fig. 3a-d:: schematische Illustration eines Strahlengangs einer erfindungsgemässen Verwendung eines SPAD-Arrays als photosensitive Fläche eines Empfängers in einem Messgerät;
- Fig. 4a,b:: erfinderische Ausführungsform ("Rolling Shutter Fenster") bezüglich der Definition der einzelnen von der Senderichtung abhängigen Teilbereiche der SPAD-Anordnung, z.B. a) eindimensional, b) zweidimensional;
- Fig. 5:: Koordinatenmessinstrument mit zweistufigem Scanmechanismus basierend auf einem empfängerseitigen SPAD-Array;
- Fig. 6a-b:: lineare Multipixelanordnung bestehend aus mehreren SPAD-Arrays für einen grosswinkligen Scanbereich.

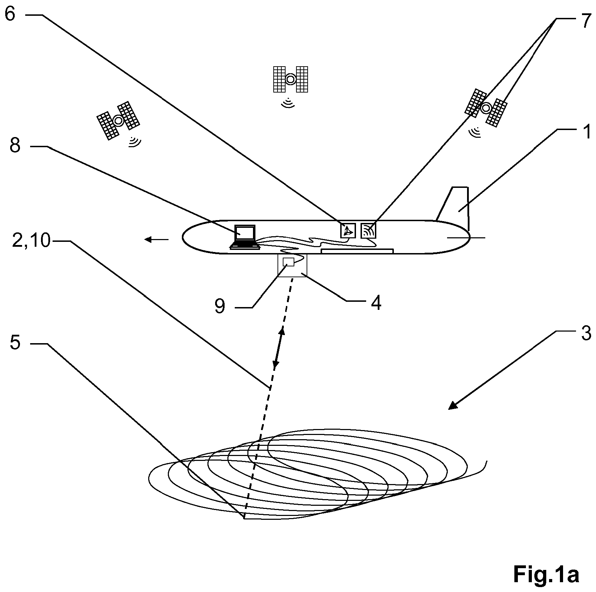

Die Figuren 1a bis 1d zeigen exemplarische Anwendungsgebiete für erfindungsgemässe Messgeräte mit Scanfunktionalität, zur Erfassung von Objekten oder Oberflächen in einer Umgebung mittels Abtastung mit einem Lasermessstrahl.

**Figur 1a** zeigt eine typische luftgestützte Vermessung basierend auf einem LiDAR-System an Bord eines luftgestützten Trägers 1, z.B. ein Flugzeug. Dabei wird eine Sendestrahlung 2 erzeugt, beispielsweise durch kurze Laserpulse, welche gemäss eines definierten Scanmusters 3 in Richtung Oberfläche abgelenkt wird, beispielsweise mittels eines beweglichen Spiegels oder mittels eines einstellbaren refraktiven optischen Elements. Dabei wird die Oberfläche kartiert, wobei für einzelne Anzielrichtungen der Sendestrahlung 2 jeweils die Distanz zwischen dem Messgerät 4 und den zugehörigen Oberflächenpunkten 5 erfasst wird, beispielsweise mittels der Pulslaufzeitmethode.

Das erfindungsgemässe Messgerät 4 kann dabei beispielsweise auf weitere Daten zur Bestimmung einer relativen oder absoluten Position des Messgerätes 4 zugreifen, beispielsweise durch den Träger 1 bereitgestellte Trägheitssensoren 6, Höhenmessdaten, oder Daten eines globalen Positioniersystems 7. Das Messgerät 4 weist aber auch eigene Trägheitsmesser auf, zum Erfassen von Trägheitsdaten bezüglich einer Eigenbewegung des Messgeräts 4, z.B. eine relative Verschiebung und Verkippung des Messgeräts 4. Zudem erfasst das Messgerät 4 beispielsweise zumindest die Winkel der senderseitigen Laserstrahlablenkeinheiten, womit die relative oder absolute Position der Oberflächenpunkte 5 am zu vermessenden Objekt bekannt ist.

Die zusätzlichen Daten können teilweise durch eine Recheneinheit 8 des Trägers prozessiert werden oder die Recheneinheit 9 des Messgeräts kann derart konfiguriert sein, dass sie die bereitgestellten (Roh-)Daten direkt verarbeitet, z.B. wobei die Recheneinheit 9 des Messgeräts kontinuierlich die Position und Lage des Messgeräts 4 anhand der Daten ableitet und beispielsweise einen zeitlichen Verlauf der Eigenbewegung des Messgeräts 4 erzeugt.

Das Scanmuster am zu vermessenden Objekt kann beispielsweise basierend auf einer einfachen "Zick-Zack"-Abtastung erzeugt werden, z.B. mittels eines sich hin und her bewegenden ("fegenden") Spiegels und der Vorwärtsbewegung des luftgestützten Trägers 1. Oft werden jedoch, wie in der Figur dargestellt, Scanmuster 3 basierend auf einer zirkularen Abtastung ("Palmer-Abtastung") verwendet, z.B. mittels eines rotierenden geneigten Ablenkspiegels oder mittels einer refraktiven Scan-Einheit. Durch die Flugbewegung entsteht somit auf der zu vermessenden Oberfläche ein spiralförmiges Scanmuster 3. Dies hat beispielsweise den Vorteil, dass dadurch mit einem Überflug jeder vermessene Oberflächenpunkt 5 jeweils von zwei unterschiedlichen Blickwinkeln erfasst werden kann. Dadurch werden beispielsweise Schatteneffekte minimiert und gleichzeitig kann ein grosses Gebiet abgetastet werden. In diesem Ausführungsbeispiel wird der optische Empfangskanal sowie der Sendekanal über dieselben Scanelemente wie Ablenkspiegel oder Polygonräder geleitet.

Erfindungsgemäss weist das Messgerät 4 einen Empfänger beispielsweise basierend auf einem SPAD-Array auf, wobei abhängig von der Senderichtung der Sendestrahlung 2 richtungsabhängige Teilbereiche des Empfängers definiert sind, um die aktive Empfängerfläche auf eine variierende Abbildungsposition der Empfangsstrahlung 10 abzustimmen, beispielsweise um einen Anzielfehler aufgrund der endlichen Laufzeit und einem sich schnell drehenden Ablenkspiegel als Funktion der Messdistanz zu kompensieren.

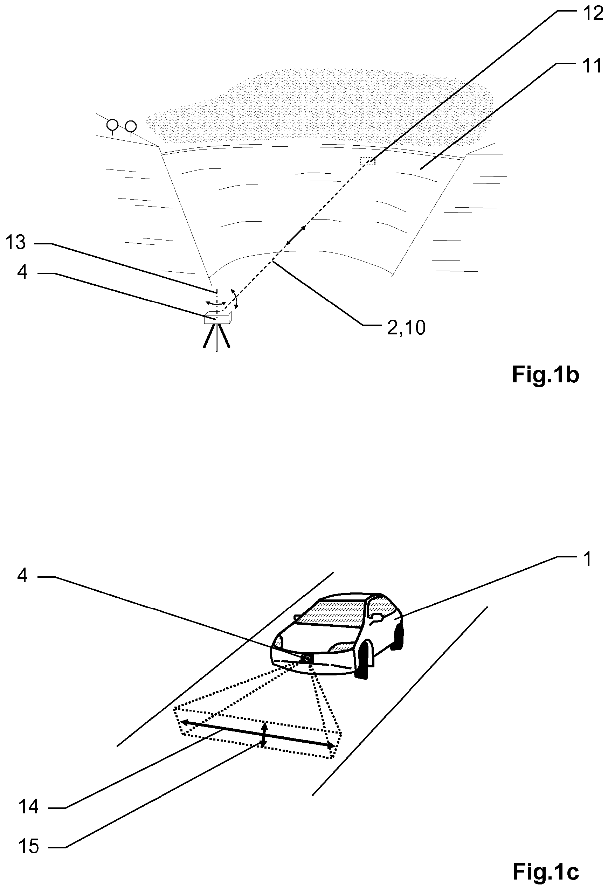

**Figur 1b** zeigt eine terrestrische Anwendung eines LiDAR-Systems, ausgelegt für mittlere bis grosse Messdistanzen, hier beispielsweise im Gebiet von Konstruktionsüberwachungen, z.B. zur Überwachung oder Überprüfung der Integrität eines Staudamms 11 mittels Erfassen von kleinsten Bewegungen des Damms 11 aufgrund von variierendem Wasserdruck.

In terrestrischen Anwendungen sind die Messdistanzen verglichen zur luftgestützten Vermessung oft kürzer, wohingegen die Abtastrate wesentlich höher sein kann, z.B. aufgrund der verbesserten mechanischen Stabilität des Trägers 1 oder aufgrund der Kenntnis von existierenden 3D-Modellen der zu vermessenden Oberfläche, wodurch beispielsweise bereits optimierte Abtastmuster verwendet werden können.

Zum Beispiel kann das Messgerät konfiguriert sein, um eine relativ kleine Oberfläche 12 des Damms mit hoher Abtastgeschwindigkeit und hoher Auflösung abzutasten, beispielsweise basierend auf dem Pulslaufzeitprinzip, wobei ein schnell rotierender Spiegel den Sendestrahl 2 entlang einer ersten Richtung ablenkt, beispielsweise zur Einstellung der Höhe, und das gesamte Messsystem 4 seitlich (vergleichsweise langsam) um die Drehachse 13 hin und her verschwenkt wird.

Erfindungsgemäss weist das Messgerät 4 einen Empfänger beispielsweise basierend auf einem SPAD-Array auf, wobei abhängig von der Senderichtung der Sendestrahlung richtungsabhängige aktive Teilbereiche des Empfängers definiert sind, um die Empfängerfläche auf eine variierende Abbildungsposition der Empfangsstrahlung 10 abzustimmen.

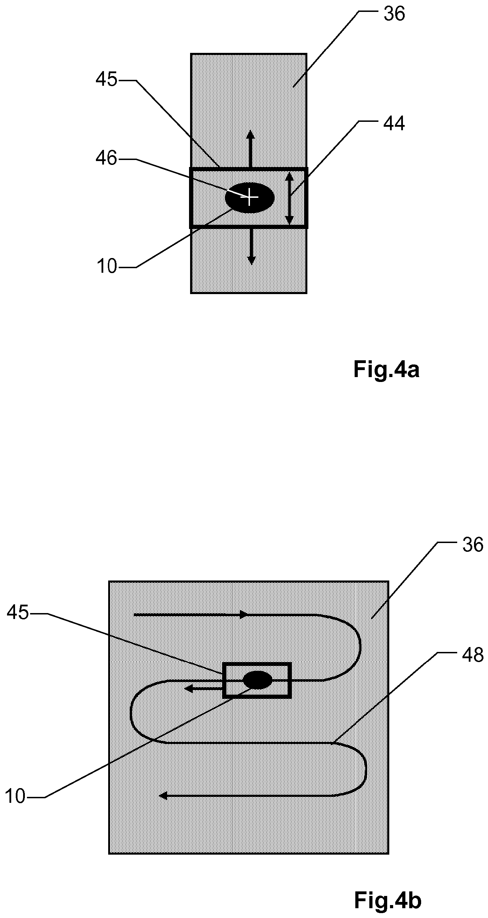

Zum Beispiel kann der Empfänger derart konfiguriert sein, dass die jeweils für das Erfassen des Empfangssignals verwendeten Teilbereiche im Sinne eines "Rolling Shutter Fensters" (siehe z.B. auch Fig. 4) mit der jeweils eingestellten Höhe des zugehörigen Sendestrahls 2 auf dem Empfänger entlang der ersten Richtung "hoch und runter fahren".

**Figur 1c** zeigt eine weitere Anwendung des erfindungsgemässen Messgeräts 4 im Bereich von autonom fahrenden Fahrzeugen, wobei beispielsweise vorgängig die zu befahrenden Strassen mittels eines mit dem Messsystem 4 ausgerüsteten Fahrzeugs 1 abgefahren werden, zur Erfassung der Strassen und zur Abbildung der Strassen in einem Modell.

Solche Systeme erfordern typischerweise eine robuste und langlebige Bauweise des Messgeräts 4, wobei typischerweise auch eine möglichst kompakte Bauweise angestrebt und wo möglich weitgehend auf bewegliche Teile verzichtet wird. Zudem hat der Messvorgang spezialisierte Anforderungen zu erfüllen, z.B. hinsichtlich Gesichtsfeld und Erfassungsrate. Zum Beispiel sollte das horizontale Gesichtsfeld 14 etwa 80 Grad umfassen, wobei das erforderliche vertikale Gesichtsfeld 15 typischerweise wesentlich kleiner ist, z.B. etwa 25 Grad. Die Erfassungsrate für die Abtastung des kompletten Gesichtsfelds liegt beispielsweise bei etwa 25 Hz.

Als Ablenkelemente werden hier deshalb oft MOEMS-Bauteile ("mikro-opto-elektro-mechanisches-System") oder einstellbare oder verformbare refraktive optische Elemente, beispielsweise Flüssiglinsen verwendet.

Die erfindungsgemässe Verwendung eines Empfängers basierend auf einem SPAD-Array hat hier beispielsweise den Vorteil, dass der optomechanische Aufbau des Empfangskanals vereinfacht werden kann, indem das Gesichtsfeld des SPAD-Arrays den gesamten senderseitigen Scanbereich von 80 Grad x 25 Grad einnimmt. Wie bereits beschrieben, ist beispielsweise aber nur ein kleiner Ausschnitt des empfängerseitigen Gesichtsfelds aktiviert und zwar diejenige Domäne (aktivierte Gruppe von Mikrozellen), welche den Empfangslichtfleck auf dem SPAD-Array umschliesst. Alternativ kann die langsame horizontale Bewegung des Messgeräts 4 beispielsweise auch empfängerseitig über die senderseitige Richtungsablenkeinheit geleitet werden, wobei die schnelle vertikale Scanbewegung empfängerseitig virtuell durchgeführt wird, das heisst mit einer eindimensionalen vertikalen Aktivierung der Domäne auf dem SPAD-Array.

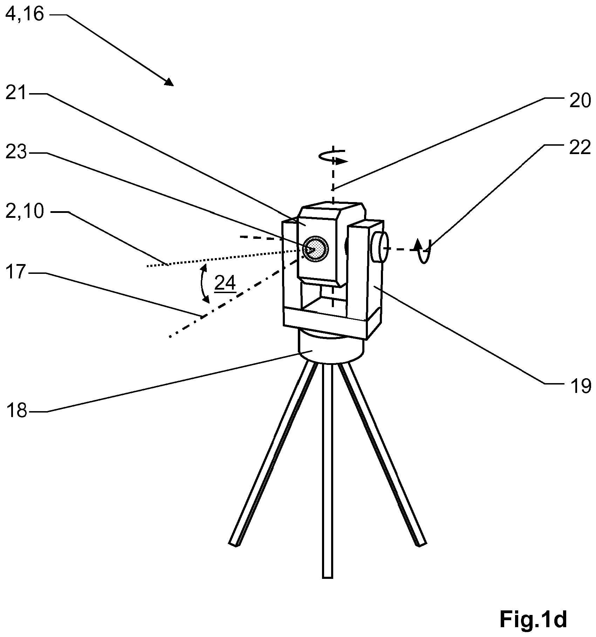

**Figur 1d** zeigt eine Verwendung des erfindungsgemässen Messgeräts 4 als Totalstation 16. Totalstationen werden beispielsweise zur Aufnahme von Eigenschaften definierter Punkte in einer Messumgebung verwendet, insbesondere zur Aufnahme von Daten mit räumlichem Bezug, d.h. Richtung, Entfernung und Winkel zu Messpunkten. Typischerweise weisen Totalstationen deshalb Richtmittel zur Ausrichtung der Anzielachse 17 der Totalstation 16 auf ein Ziel auf.

Totalstationen können ferner für eine automatische Zielverfolgung ausgelegt sein, beispielsweise wobei ein Ziel durch emittierte Trackingstrahlung aktiv beleuchtet und anhand der zurückkommenden Strahlung identifiziert und verfolgt wird, zum Beispiel mittels Erfassen der Ablage des erfassten Trackingstrahls auf einer positionssensitiven Diode.

Eine Totalstation 16 aus dem Stand der Technik weist beispielsweise eine Basis 18 und eine Stütze 19 auf, wobei die Stütze 19 um eine erste Drehachse 20 drehbar auf der Basis 18 befestigt ist. Ferner weist die Totalstation 16 beispielsweise einen Träger 21 auf, der um eine zur ersten Drehachse 20 im Wesentlichen orthogonale zweite Drehachse 22 drehbar an der Stütze befestigt ist, wobei der Träger 21 einen optischen Distanzmesser zur Messung einer Distanz zum Ziel mittels eines Distanzmessstrahls 2 aufweist. Der Träger 21 weist ferner beispielsweise eine gemeinsame Aus- und Eintrittsoptik 23 für den ausgesendeten Distanzmessstrahl 2 (Sendestrahl) und zugehörige zurückkommende Teile des Distanzmessstrahls 10 (Empfangsstrahl) auf. Alternativ kann der Träger auch eine separate Eintrittsoptik und eine separate Austrittsoptik aufweisen.

Typischerweise wird zur zweidimensionalen Ausrichtung des Distanzmessstrahls 2 auf ein Ziel sowohl die Stütze 19 wie auch der Träger 21 bewegt, wobei für eine spezielle Vermessungsaufgabe beispielsweise für jeden Messvorgang mindestens eine Bewegung der Stütze 19 oder des Trägers 21 notwendig ist. Hauptsächlich die Stütze 19, aber auch der Träger 21, sind oft vergleichsweise schwere und somit träge Bauteile, weshalb die Abtastgeschwindigkeit im Rahmen einer Vermessungsaufgabe entsprechend limitiert ist.

Um die Abtastrate zu erhöhen, weist der Träger 21 deshalb beispielsweise ein zusätzliches schnelles Ablenkelement auf, zur schnellen Ablenkung 24 des ausgehenden Distanzmessstrahls 2 gegenüber dem Träger 21. Somit kann also eine schnelle Bewegung des zur Messung benötigten Strahlenbündels des Distanzmessstrahls 2 innerhalb des Erfassungsbereichs der Eintrittsoptik 23 erwirkt werden, ohne hierfür die sonst notwendige Bewegung der grösseren (trägen) Komponenten zu erfordern. Punkte ausserhalb des Erfassungsbereichs der Eintrittsoptik 23 werden erfasst mittels eines kombinierten Bewegungsablaufs. Die langsamen oder trägen Bewegungen mit niedriger Beschleunigung erfolgen mittels Stütze 19 und Träger 21, die schnellen Bewegungen mit hoher Beschleunigung erfolgen senderseitig mit bekannten Mitteln wie beispielsweise Polygon (Prisma oder Spiegel), Laserarray oder MEMS-Ablenkmittel und empfängerseitig mittels der erfinderischen Vorrichtung.

Erfindungsgemäss ist der Empfänger des Distanzmessers beispielsweise basierend auf einem SPAD-Array ausgebildet, wobei die Ansteuerung des zusätzlichen schnellen Ablenkelements im Träger 21 und das Erfassen des Empfangssignals derart synchronisiert sind, dass basierend auf der Senderichtung der Distanzmessstrahlung 2 (Sendestrahlung) das Empfangssignal basierend auf einem eingestellten aktiven Teilbereich des Empfängers erfasst wird. Empfängerseitig wird die schnelle Scanbewegung wiederum virtuell durchgeführt, das heisst mit einer ein- oder zweidimensionalen Aktivierung der dem Lichtfleck zugeordneten Domäne auf dem SPAD-Array.

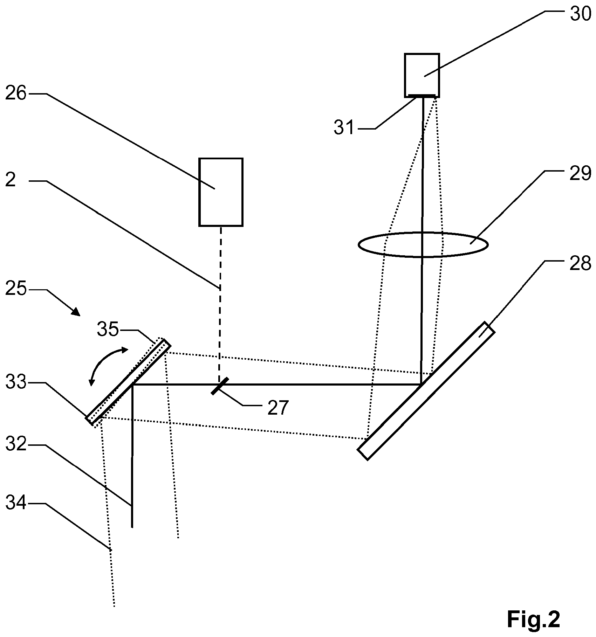

**Figur 2** zeigt eine schematische Illustration für eine Entstehung eines Anzielfehlers aufgrund der schnellen Bewegung eines Ablenkelements 25, hier ein sich schnell bewegender (z.B. "fegender") Ablenkspiegel, und der endlichen Laufzeit des Sendesignals.

Der Sendekanal weist eine Laserquelle 26 auf, wobei die durch die Laserquelle 26 erzeugte Sendestrahlung 2 mittels eines ersten festen Ablenkelements 27 in einen gemeinsamen Sende- und Empfangskanal eingekoppelt wird. Ferner befindet sich ein sich bewegender (z.B. "fegender") Ablenkspiegel 25 im gemeinsamen Sende- und Empfangskanal, wobei der sich bewegende Ablenkspiegel 25 sowohl auf die Sendestrahlung 2 wie auch auf die Empfangsstrahlung wirkt. Der Empfangskanal weist ferner einen zweites festes Ablenkelement 28, eine Abbildungsoptik 29, und einen LiDAR-Empfänger 30 mit einer photosensitiven Empfangsfläche 31 auf.

Weiter sind einerseits optische Hauptstrahlen 32 bezüglich einer aktuellen Anzielrichtung, d.h. einer aktuellen Einstellung 33 des sich bewegenden Ablenkspiegels 25, und andererseits Hauptstrahlen 34 bezüglich einer vorhergehenden Einstellung 35 des sich bewegenden Ablenkspiegels 25 angedeutet. Für beide Orientierungen des Ablenkspiegels 25 ist der optische Pfad zwischen LiDAR-Empfänger und Ablenkspiegel 25 statisch.

Aufgrund der endlichen Laufzeit eines ausgesendeten und zurückkommenden Signales und der schnellen Abtastrate mittels des beweglichen Ablenkspiegels 25, z.B. 300 rad/s, hat sich die Orientierung des Ablenkspiegels 25 zwischen dem Aussendezeitpunkt der Sendestrahlung 2 und dem Rückkehrzeitpunkt der Empfangsstrahlung verändert. Dies bedeutet, dass die Empfangsstrahlung unter einem (distanzabhängigen) Winkelversatz in die restliche (feste) Empfangsoptik gelenkt wird. Das bedeutet also, dass der Empfänger mit einer Ablage abhängig von der Messdistanz von der Position wegschaut, wo der Laserstrahl die zu scannende Oberfläche trifft. Das Gesichtsfeld des Empfängers 30, respektive die Empfängerfläche 31, muss deshalb beispielsweise ein Vielfaches des Durchmessers des Laserstrahls abdecken. Wenn der LiDAR-Scanner zudem ein komplexes zweidimensionales Abtastraster ausführen kann, erfolgt der Anzielfehler in alle Richtungen des Laserstrahls, wodurch die Gesichtsfeldanforderung für den Empfänger 30 also nochmals vegrössert wird. Durch die grössere Empfängerfläche 31 wird jedoch auch der Hintergrundlichtanteil erhöht, was beispielsweise zu einem verschlechterten Signal-Rausch Verhältnis führt.

Erfindungsgemäss ist die Empfängerfläche 31 beispielsweise als SPAD-Array ausgeführt, wobei nur der Teilbereich, welcher den reflektierten Laserspot umfasst zur Lidar-Empfangs- und Auswerteeinheit weitergeleitet wird.

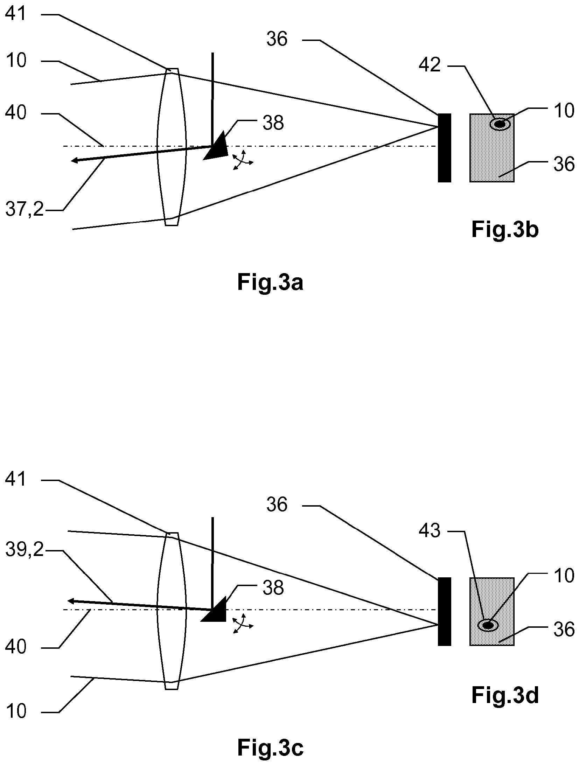

Die **Figuren 3a bis 3d** zeigen schematisch eine erfindungsgemässe Verwendung eines SPAD-Arrays 36 als photosensitive Fläche eines Empfängers. Die Figuren 3a,3b beziehen sich dabei auf eine erste Senderichtung 37, eingestellt durch ein Ablenkelement 38, welches im Wesentlichen nur auf die Sendestrahlung 2 wirkt, d.h. die optische Achse des Empfangskanals ist im Wesentlichen statisch, und die Figuren 3c,3d beziehen sich auf eine zweite Senderichtung 39, eingestellt durch das Ablenkelement 38.

**Figur 3a** zeigt aus einer Seitenansicht einen vereinfachten optischen Pfad für die erste Senderichtung 37, mit einer Hauptachse 40 einer gemeinsamen Aus-/Eintrittsoptik 41 und einem ein SPAD-Array 36 aufweisenden Empfänger. Das Ablenkelement 38 kann hier die Sendestrahlung 2 insbesondere eindimensional oder zweidimensional ablenken, d.h. entlang einer ersten und/oder zweiten Ablenkrichtung. Des Weiteren ist für einen Fachmann klar, dass je nach Typ des verwendeten Ablenkelements 38, z.B. Spiegelelement, Prisma, Polygonrad, Doppelkeil, refraktives Element, bewegliche Lichtleiter oder MOEMS-Bauteil, und Wirkungsweise der dadurch erwirkten Strahlablenkung, z.B. Verschiebung/Verkippung des Ablenkelements oder elektrooptische Ansteuerung von optischen (z.B. refraktiven) Eigenschaften des Ablenkelements, dieses sowohl in einem parallelen wie auch in einem divergenten Strahlengang angeordnet sein kann.

**Figur 3b** zeigt in Draufsicht den Empfänger, respektive den SPAD-Array 36 aus Figur 3a. Erfindungsgemäss weist der SPAD-Array 36 eine Vielzahl von Mikrozellen auf und ist derart konfiguriert, dass die Mikrozellen einzeln und/oder in Mikrozellengruppen (Domänen) auslesbar sind und dadurch einzeln auslesbare Teilbereiche des SPAD-Arrays 36 einstellbar sind. Die Ansteuerung des Ablenkelements 38 und das Erfassen des Empfangsstrahls 10 sind dabei derart synchronisiert, dass basierend auf der Senderichtung, hier der ersten Senderichtung 37, der Empfangsstrahl 10 basierend auf einem definierten Teilbereich des SPAD-Arrays 36 detektiert wird, hier einem ersten Teilbereich 42.

In analoger Weise zeigen die **Figuren 3c** (Seitenansicht) und **3d** (Draufsicht) den optischen Pfad bezüglich der zweiten Senderichtung 39, wobei basierend auf der zweiten Senderichtung 39 ein zweiter Teilbereich 43 für das Erfassen des Empfangsstrahls 10 definiert ist.

Insbesondere können die jeweils definierten aktiven Teilbereiche 42,43 jeweils bezüglich der Strahlform des einfallenden Empfangsstrahls 10 optimiert werden. Zum Beispiel kann die Fläche des Teilbereichs im Wesentlichen auf den Strahldurchmesser des jeweiligen Empfangsstrahls 10 abgestimmt sein, wobei beispielsweise Veränderungen der Lichtfleckgrösse aufgrund einer empfängerseitigen Fixfokusoptik berücksichtigt werden. Somit kann der Hintergrundlichtanteil auch mit einem an sich bezüglich des Strahldurchmessers überdimensionierten Empfänger für eine Einzelmessung jeweils tief gehalten werden.

**Figur 4a** zeigt eine weitere erfinderische Ausführungsform bezüglich der Definition der einzelnen von der Senderichtung abhängigen aktiven Teilbereiche eines als SPAD-Anordnung 36 ausgebildeten Sensors. Die Teilbereiche werden hier ähnlich einem sogenannten "Rolling Shutter" Prinzip definiert, d.h. dass der ortsabhängige und über die Optik richtungsabhängig wirkende Teilbereich jeweils durch eine Kombination von mehreren SPAD-Zeilen definiert ist, wobei der Teilbereich ähnlich einem in der Höhe 44 veränderlichen Rolling Shutter Fenster 45 in einer Richtung senkrecht zu den SPAD-Zeilen, abhängig von der aktuellen Senderichtung, über den SPAD-Array 36 auf und ab "rollt". Diese Definition von Teilbereichen hat beispielsweise den Vorteil einer vereinfachten Ansteuerungselektronik, wobei beispielsweise weiter die Höhe 44 des aktuellen Teilbereichs 45 an den Strahldurchmesser der Empfangsstrahlung 10 angepasst werden kann, z.B. als Funktion einer distanzabhängigen Veränderung der Lichtfleckgrösse.

Ein derart konfigurierter SPAD-Array ist zum Beispiel geeignet, wenn die Strahlablenkung durch das Ablenkelement 38 (siehe Fig.3a) im Wesentlichen eindimensional, d.h. entlang einer mit der "Rollrichtung" korrespondierenden Ablenkrichtung abgelenkt wird.

Weiter kann das Messgerät beispielsweise derart konfiguriert sein, dass eine Auftreffposition 46 der Empfangsstrahlung 10 auf dem Empfänger, resp. der SPAD-Anordnung 36, abgeleitet werden kann, z.B. mittels Schwerpunktbestimmung oder Maximumbestimmung des Empfangssignals. Durch die so abgeleitete Auftreffposition 46 kann der aktuelle aktive Teilbereich 45 in Echtzeit noch fein an den Strahldurchmesser der Empfangsstrahlung 10 angepasst werden. Zudem kann mittels der abgeleiteten Auftreffposition 46 und der damit korrespondierenden Distanzmessdaten beispielsweise die zugehörige Senderichtung abgeleitet werden, beispielsweise um Winkeldaten bezüglich der Senderichtung, z.B. basierend auf Steuersignalen des Ablenkelements 38, zu überprüfen oder um allenfalls eine Korrekturinformation bezüglich der Winkeldaten abzuleiten.

**Figur 4b** zeigt die Empfangsfläche einer SPAD-Anordnung 36 mit einem von der Senderichtung abhängigen aktiven Teilbereich 45 der sich in zweidimensionaler Richtung verschiebt. Dargestellt ist die Bewegungsspur 48 des Lichtflecks 10 auf dem SPAD-Array 36 und damit die Bahn des aktiven Teilbereichs 45, also der aktiven Mikrozellen, die sich als Domäne in einer scannenden Bahn über die Fläche des SPAD-Arrays 36 bewegt. Auch hier sind die jeweiligen Teilbereiche einer Richtung der Sendeeinheit zugeordnet. Bewegt sich die Richtung des Sendestrahls beispielsweise in Form einer schlangenförmigen Linie 48 so bewegt sich der aktive Teilbereich 45 in ähnlicher Weise synchron auf der SPAD-Anordnung 36.

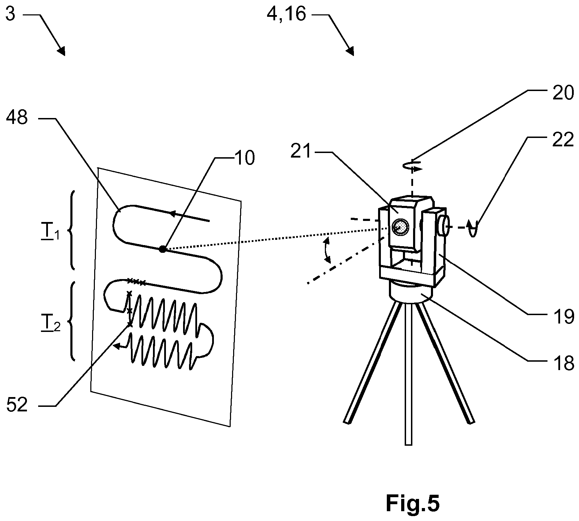

**Figur 5** zeigt ein erfindungsgemässes Messgerät als Totalstation 16. Das Instrument ist hier mit einem zweistufigen Scanmechanismus ausgestattet, basierend auf einer ersten Drehachse 20 zur Drehung der Stütze 19 bezüglich der Basis 18, einer zweiten Drehachse 22 zur Drehung des Trägers 21 bezüglich der Stütze 19, und wenigstens einem schnell scannenden Ablenkelement im Träger, das den Sendstrahl 10 mit hoher Winkelgeschwindigkeit zusätzlich abklenken kann.

In der Figur ist ein Scanmuster 3 im Objektraum als Bewegungsspur 48 dargestellt, wobei die S-förmige Bahn in einem ersten Teil T₁ lediglich durch Drehungen der Stütze 19 und/oder des Trägers 21 um die erste 20 und zweite 22 Achse erzeugt wird. In einem zweiten Teil T₂ wird die Bewegungsspur 48 mittels des zusätzlichen schnell scannenden Ablenkelements im Träger 21 erzeugt, wodurch eine dichtere Flächenabdeckung erreicht wird. Dies bewirkt beispielsweise eine gleichmässigere Verteilung der Punktdichte auf der zu scannenden Objektfläche, insbesondere bei sehr hohen Distanzmessraten von mehr als 1 MHz. Ohne das schnell scannende Ablenkelement würden die Messpunkte 52 dicht auf einer Linie der Bewegungsspur 48 zu liegen kommen, zwischen den Linien würden jedoch Messpunkte fehlen. Auf der Empfängerseite braucht es ebenfalls eine schnelle Nachführung des Gesichtsfelds. Mittels des erfinderischen Sensors wird, wie beispielsweise bezüglich den Figuren 4a und 4b beschrieben, ein zur Senderichtung zeitlich und räumlich synchronisierter aktiver Teilbereich 45 (Fig. 4a,b) in eindimensionaler oder zweidimensionaler Richtung verschoben, sodass aus einer Gruppe von Mikrozellen das Signal der zugeordneten Laseremission zeitaufgelöst einer Distanzmessvorrichtung weitergeleitet werden kann.

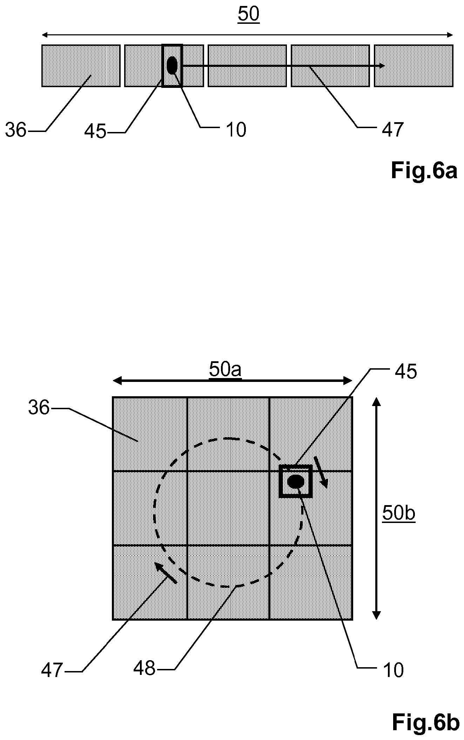

**Figuren 6a** und **6b** zeigen zwei weitere erfinderische Ausführungsformen einer Photosensoreinheit geeignet für sogenanntes "solid state scanning". In **Figur 6a** besteht die Photosensoreinheit aus mehreren in einer Linie angeordneten SPAD-Arrays 36. Diese Anordnung ist beispielsweise geeignet, um grössere Winkelbereiche im Objektraum abzuscannen. Der empfangene Laserspot 10 bewegt sich dabei über die mehreren SPAD-Arrays hinweg. Der aktive Teilbereich 45 wird zeit- und orts-synchron mit dem Empfangslichtfleck 10 bewegt, sodass das Messignal effizient empfangen, aber gleichzeitig möglichst wenig Umgebungslicht pro Mikrozelle erfasst wird. Die Verschiebung des Teilbereichs 45 erscheint als virtuelle Bewegung 47 und ist in Pfeilrichtung angedeutet. Das erreichbare Field-of-View 50 der Empfangseinheit kann in einfacher Weise mittels der Anzahl von SPAD-Arrays 36 dimensioniert werden.

In **Figur 6b** sind mehrere SPAD-Arrays 36 in einer zweidimensionalen Multipixel-Anordnung dargestellt. Jedes Pixel ist ein eigener SPAD-Array 36. Der erreichbare Field-of-View 50a,b ist hier beispielhaft basierend auf einer 3x3 Anordnung einzelner SPAD-Arrays 36 dargestellt. Damit die Gesamtdetektionsfläche keine Lücken aufweist, können beispielsweise SPAD-Arrays ohne Randbereiche verwendet werden. In diesem Beispiel beschreibt die Bewegung des empfangenen Laserspots 10 eine Kreisbahn 48, wobei der aktive Teilbereich 45 den Laserspot 10 umschliesst und dermassen angesteuert wird, dass er sich mit dem Laserspot 10 entlang einer virtuellen Scanrichtung 47 bewegt. Befindet sich die Mikrozellendomäne 45 vollständig auf einem SPAD-Array, dann wird das Empfangssignal aller Mikrozellen innerhalb der Domäne 45 an eine einzige Ausgangssignalleitung ausgegeben, überdeckt hingegen die Mikrozellendomäne 45 zwei benachbarte SPAD-Arrays, dann werden zwei Ausgangssignalleitungen aktiviert, die dann ausserhalb der Multipixel-SPAD-Arrayanordnung über eine Multiplexerschaltung zusammengeführt werden können. Diese Signalzusammenführungselektronik kann aber beispielsweise auch auf den SPAD-Array-Pixeln 36 (SPAD-Array-Chips) direkt implementiert sein.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Messgerät (4) zur optischen Vermessung einer Umgebung, aufweisend
• eine Strahlungsquelle (26) zur Erzeugung einer Sendestrahlung (2),
• einen Sendekanal zum Aussenden von zumindest einem Teil der Sendestrahlung,
• ein Strahllenkelement (38) im Sendekanal welches konfiguriert ist zum Ablenken der Sendestrahlung (2) und zur Einstellung einer zeitlich veränderlichen Senderichtung (37,39) der Sendestrahlung (2) aus dem Sendekanal,
• einen Empfangskanal mit einem Empfänger (30) der konfiguriert ist zum Erfassen eines Empfangssignals basierend auf mindestens einem Teil der zurückkommenden Sendestrahlung, nachfolgend Empfangsstrahlung (10) genannt,
• eine Steuerelektronik, die konfiguriert ist zur Steuerung des Messgeräts (4) basierend auf einem vorprogrammierten Messvorgang,
• einen Winkelbestimmer zum Erfassen von Winkeldaten bezüglich der Senderichtung (37,39) der Sendestrahlung (2), und
• eine Recheneinheit (9) zum Ableiten von Distanzmessdaten basierend auf dem Empfangssignal, wobei durch den Messvorgang eine Abtastung mittels der Sendestrahlung (2) durchgeführt wird, basierend auf
• einer definierten fortlaufenden Ansteuerung des Strahllenkelements (38) zur fortlaufenden Änderung der Senderichtung (37,39) der Sendestrahlung (2),
• einem fortlaufenden Aussenden der Sendestrahlung (2) und einem fortlaufenden Erfassen des Empfangssignals, und
• einem Ableiten der Distanzmessdaten,
wobei
• der Empfänger (30) zum Erfassen des Empfangssignals einen optoelektronischen Sensor (36) basierend auf einer Anordnung von Mikrozellen aufweist,
• der Sensor (36) eine Vielzahl von Mikrozellen aufweist und derart konfiguriert ist, dass die Mikrozellen einzeln und/oder in Mikrozellengruppen auslesbar sind und dadurch einzeln auslesbare aktive Teilbereiche (42,43,45) des Empfängers (30) einstellbar sind, und
• im Rahmen des Messvorgangs die Ansteuerung des Strahllenkelements (38) und das Erfassen des Empfangssignals derart synchronisiert sind, dass
o das Erfassen des Empfangssignals basierend auf einem aktiven Teilbereich (42,43,45) des Empfängers (30) erfolgt, wobei
o der aktive Teilbereich (42,43,45) basierend auf den die Senderichtung (37,39) der Sendestrahlung (2) definierenden Winkeldaten und/oder basierend auf Distanzmessdaten eingestellt wird,
**dadurch gekennzeichnet, dass**
• das Messgerät (4) einen Trägheitsmesser aufweist der konfiguriert ist zum Erfassen von Trägheitsdaten bezüglich einer Eigenbewegung des Messgeräts (4), nämlich einer Verkippung, und
• der im Rahmen des Messvorgangs verwendete aktive Teilbereich (42,43,45) basierend auf den Trägheitsdaten ausgewählt wird.

2. Messgerät (4) nach Anspruch 1,
**dadurch gekennzeichnet, dass**
das Messgerät (4) konfiguriert ist
• zum Erfassen eines zeitlichen Verlaufs der Eigenbewegung des Messgeräts (4), und
• um die Eigenbewegung des Messgeräts (4) basierend auf dem zeitlichen Verlauf im Voraus abzuschätzen,
wobei der im Rahmen des Messvorgangs verwendete aktive Teilbereich (42,43,45) basierend auf der abgeschätzten Eigenbewegung des Messgeräts (4) ausgewählt wird, insbesondere unter Berücksichtigung eines zeitlichen Verlaufs von initial abgeleiteten Distanzmessdaten.

3. Messgerät (4) nach einem der vorhergehenden Ansprüche, **dadurch gekennzeichnet, dass**
das Messgerät (4) konfiguriert ist
• um eine Auftreffposition (46) der
Empfangsstrahlung (2) auf dem Sensor (36) abzuleiten, insbesondere mittels Schwerpunktbestimmung oder Maximumbestimmung des erfassten Empfangssignals, und
• um basierend auf der Auftreffposition (46) und den Distanzmessdaten eine Korrekturinformation bezüglich der Winkeldaten abzuleiten.

4. Messgerät (4) nach einem der vorhergehenden Ansprüche, **dadurch gekennzeichnet, dass**
das Messgerät (4) konfiguriert ist um basierend auf den Winkeldaten eine erste Abbildungsinformation für eine Strahlform und/oder Lage der auf dem Sensor (36) abgebildeten Empfangsstrahlung (10) abzuschätzen, insbesondere basierend auf einer definierten Fixfokusoptik des Empfangskanals, wobei der im Rahmen des Messvorgangs verwendete aktive
Teilbereich (42,43,45) basierend auf der abgeschätzten ersten Abbildungsinformation ausgewählt wird.

5. Messgerät (4) nach einem der vorhergehenden Ansprüche, **dadurch gekennzeichnet, dass**
das Messgerät (4) konfiguriert ist
• um basierend auf einem Feedback des Sensors (36) bezüglich eins vorgängig erfassten Empfangssignals eine zweite Abbildungsinformation für eine Strahlform und/oder Lage der auf dem Sensor (36) abgebildeten Empfangsstrahlung (10) abzuschätzen,
wobei der im Rahmen des Messvorgangs verwendete aktive Teilbereich (42,43,45) basierend auf der abgeschätzten zweiten Abbildungsinformation ausgewählt wird.

6. Messgerät (4) nach einem der vorhergehenden Ansprüche, **dadurch gekennzeichnet, dass**
das Messgerät (4) konfiguriert ist
• um basierend auf den Distanzmessdaten eine dritte Abbildungsinformation für eine Strahlform und/oder Lage der auf dem Sensor (36) abgebildeten Empfangsstrahlung (10) abzuschätzen,
wobei der im Rahmen des Messvorgangs verwendete aktive Teilbereich (42,43,45) basierend auf der abgeschätzten dritten Abbildungsinformation ausgewählt wird.

7. Messgerät (4) nach einem der vorhergehenden Ansprüche, **dadurch gekennzeichnet, dass**
der Empfangskanal derart konfiguriert ist, dass die abbildende Wirkung des Empfangskanals im Wesentlichen unabhängig ist von der Ansteuerung des Strahllenkelements (38), insbesondere wobei das Strahllenkelement (38) derart angeordnet ist, dass es lediglich auf die Sendestrahlung (2) wirkt.

8. Messgerät (4) nach einem der Ansprüche 1 bis 6,
**dadurch gekennzeichnet, dass**
• der Empfangskanal derart konfiguriert ist, dass die abbildende Wirkung des Empfangskanals abhängig ist von der Ansteuerung des Strahllenkelements (38), welches derart angeordnet ist, dass es auf die Empfangsstrahlung (10) wirkt, so dass abhängig von der Ansteuerung des Strahllenkelements (38) ein erster Ablenkwinkel der Sendestrahlung (2) und ein zweiter Ablenkwinkel der Empfangsstrahlung (10) gegeben ist, und
• das Messgerät (4) konfiguriert ist um einen Winkelunterschied zwischen des ersten und zweiten Ablenkwinkels abzuschätzen, basierend auf einer Abschätzung des Zeitunterschieds zwischen dem Zeitpunkt des Passierens des Strahllenkelements (38) durch die Sendestrahlung (2) und dem Zeitpunkt des Passierens des Strahllenkelements (38) durch die zugehörige Empfangsstrahlung (10),
wobei der im Rahmen des Messvorgangs verwendete aktive Teilbereich (42,43,45) basierend auf dem abgeschätzten Winkelunterschied eingestellt wird.

9. Messgerät (4) nach Anspruch 8,
**dadurch gekennzeichnet, dass**
der Winkelunterschied abgeschätzt wird basierend auf mindestens einem Element aus
• einer Distanz zu einem Zielobjekt in der Umgebung, insbesondere basierend auf initial erfassten Distanzmessdaten,
• einer Einstellrate der zeitlich veränderlichen Senderichtung (37,39),
• einem durch den Messvorgang definierten Abtastmuster (3) für die scannende Abtastung mittels des Strahllenkelements (38), und
• der Eigenbewegung des Messgeräts (4).

10. Messgerät (4) nach einem der Ansprüche 8 bis 9,
**dadurch gekennzeichnet, dass**
der Winkelunterschied abgeschätzt wird basierend auf einer kontinuierlich erfolgenden Trendabschätzung auf Basis von bisher abgeschätzten Winkelunterschieden, insbesondere basierend auf den letzten drei unmittelbar vorhergehenden Winkelunterschieden.

11. Messgerät (4) nach einem der vorhergehenden Ansprüche, **dadurch gekennzeichnet, dass**
der Empfänger (30) mehrere Sensoren (36) aufweist, wobei die mehreren Sensoren eindimensional oder zweidimensional zueinander angeordnet sind, insbesondere wobei jeder Sensor (36) eine separate Ansteuerelektronik und/oder Auswerteelektronik aufweist.

12. Messgerät (4) nach einem der vorhergehenden Ansprüche, **dadurch gekennzeichnet, dass**
der Empfänger (30) derart ausgebildet ist, dass ein Satz von zeitlich parallel auslesbaren aktiven Teilbereichen (42,43,45) definierbar ist,
insbesondere wobei die Strahlungsquelle (26) konfiguriert ist,
• ein Bündel von parallel erzeugten unterschiedlich gerichteten und/oder beabstandeter Lasermessstrahlen zu erzeugen, und
• die Teilbereiche (42,43,45) des Satzes von aktiven Teilbereichen derart definiert werden, dass sie jeweils einem Lasermessstrahl des Bündels von Lasermessstrahlen zugeordnet sind.

13. Messgerät (4) nach einem der vorhergehenden Ansprüche, **dadurch gekennzeichnet, dass**
• der Empfänger (30) empfangsstrahlungsseitig ein für die Empfangsstrahlung (10) strahlungsundurchlässiges Blockierelement aufweist,
• das Blockierelement derart konfiguriert ist, dass ein zeitlich variabel einstellbarer Durchlassbereich zum Durchlassen der Empfangsstrahlung (10) zur Gesamtdetektorfläche des Empfängers (30) eingestellt wird, wobei
• die Position des Durchlassbereichs bezüglich der Gesamtdetektorfläche einstellbar ist, insbesondere wobei der Durchlassbereich ferner bezüglich seiner Form und/oder seinem Ausmass einstellbar ist.

## Claims

1. Measuring device (4) for optically surveying an environment, comprising
- a radiation source (26) for generating transmitted radiation (2),
- a transmitting channel for emitting at least a part of the transmitted radiation,
- a beam deflection element (38) in the transmitting channel, which is configured to deflect the transmitted radiation (2) and to set a chronologically varying transmission direction (37, 39) of the transmitted radiation (2) out of the transmitting channel,
- a receiving channel comprising a receiver (30), which is configured to acquire a reception signal based on at least a part of the returning transmitted radiation, referred to hereafter as received radiation (10),
- a control electronics unit, which is configured to control the measuring device (4) based on a preprogrammed measurement procedure,
- an angle determining unit for acquiring angle data with respect to the transmission direction (37, 39) of the transmitted radiation (2), and
- a computer unit (9) for deriving distance measurement data based on the reception signal, wherein scanning is carried out by means of the transmitted radiation (2) by way of the measurement procedure, based on
- a defined ongoing actuation of the beam deflection element (38) for the ongoing change of the transmission direction (37, 39) of the transmitted radiation (2),
- an ongoing emission of the transmitted radiation (2) and an ongoing acquisition of the reception signal, and
- a derivation of the distance measurement data, wherein
- the receiver (30) for acquiring the reception signal has an optoelectronic sensor (36) based on an assembly of microcells,
- the sensor (36) has a plurality of microcells and is configured such that the microcells can be read out individually and/or in microcell groups and active sections (42, 43, 45), which can be read out individually, of the receiver (30) are thus settable, and
- in the scope of the measurement procedure, the actuation of the beam deflection element (38) and the acquisition of the reception signal are synchronized such that
- the acquisition of the reception signal takes place based on an active section (42, 43, 45) of the receiver (30), wherein
- the active section (42, 43, 45) is set based on the angle data defining the transmission direction (37, 39) of the transmitted radiation (2) and/or based on distance measurement data,
**characterized in that**
- the measuring device (4) has an inertia meter which is configured to acquire inertia data with respect to an intrinsic movement of the measuring device (4) that is a tilt, and
- the active section (42, 43, 45) used in the scope of the measurement procedure is selected based on the inertia data.

2. Measuring device (4) according to claim 1, **characterized in that**
the measuring device (4) is configured
- to acquire a time curve of the intrinsic movement of the measuring device (4), and
- to estimate the intrinsic movement of the measuring device (4) in advance based on the time curve,
wherein the active section (42, 43, 45) used in the scope of the measurement procedure is selected based on the estimated intrinsic movement of the measuring device (4), in particular in consideration of a time curve of initially derived distance measurement data.

3. Measuring device (4) according to any one of the preceding claims,
**characterized in that**
the measuring device (4) is configured
- to derive a position of incidence (46) of the received radiation (2) on the sensor (36), in particular by means of focal point determination or maximum determination of the acquired reception signal, and
- to derive an item of correction information with respect to the angle data based on the position of incidence (46) and the distance measurement data.

4. Measuring device (4) according to any one of the preceding claims,
**characterized in that**
the measuring device (4) is configured, based on the angle data, to estimate a first item of imaging information for a beam shape and/or location of the received radiation (10) imaged on the sensor (36), in particular based on a defined fixed focus optical unit of the receiving channel, wherein the active section (42, 43, 45) used in the scope of the measurement procedure is selected based on the estimated first item of imaging information.

5. Measuring device (4) according to any one of the preceding claims,
**characterized in that**
the measuring device (4) is configured
- based on feedback of the sensor (36) with respect to a previously acquired reception signal, to estimate a second item of imaging information for a beam shape and/or location of the received radiation (10) imaged on the sensor (36),
wherein the active section (42, 43, 45) used in the scope of the measurement procedure is selected based on the estimated second item of imaging information.

6. Measuring device (4) according to any one of the preceding claims,
**characterized in that**
the measuring device (4) is configured
- based on the distance measurement data, to estimate a third item of imaging information for a beam shape and/or location of the received radiation (10) imaged on the sensor (36),
wherein the active section (42, 43, 45) used in the scope of the measurement procedure is selected based on the estimated third item of imaging information.

7. Measuring device (4) according to any one of the preceding claims,
**characterized in that**
the receiving channel is configured such that the imaging effect of the receiving channel is substantially independent of the actuation of the beam deflection element (38), in particular wherein the beam deflection element (38) is arranged such that it acts solely on the transmitted radiation (2) .

8. Measuring device (4) according to any one of claims 1 to 6,
**characterized in that**
- the receiving channel is configured such that the imaging effect of the receiving channel is dependent on the actuation of the beam deflection element (38), which is arranged such that it acts on the received radiation (10), and therefore dependent on the actuation of the beam deflection element (38), a first deflection angle of the transmitted radiation (2) and a second deflection angle of the received radiation (10) are provided, and
- the measuring device (4) is configured to estimate an angle difference between the first and second deflection angles, based on an estimation of the time difference between the point in time of the passage of the beam deflection element (38) by the transmitted radiation (2) and the point in time of the passage of the beam deflection element (38) by the associated received radiation (10),
wherein the active section (42, 43, 45) used in the scope of the measurement procedure is set based on the estimated angle difference.

9. Measuring device (4) according to claim 8, **characterized in that**
the angle difference is estimated based on at least one element of
- a distance to a target object in the environment, in particular based on initially acquired distance measurement data,
- a setting rate of the chronologically variable transmission direction (37, 39),
- a scanning pattern (3) defined by the measurement procedure for the sweeping scanning by means of the beam deflection element (38), and
- the intrinsic movement of the measuring device (4) .

10. Measuring device (4) according to any one of claims 8 to 9, **characterized in that**
the angle difference is estimated based on a continuously occurring trend estimation on the basis of previously estimated angle differences, in particular based on the last three immediately preceding angle differences.

11. Measuring device (4) according to any one of the preceding claims,
**characterized in that**
the receiver (30) has multiple sensors (36), wherein the multiple sensors are arranged one-dimensionally or two-dimensionally in relation to one another, in particular wherein each sensor (36) has a separate actuation electronics unit and/or analysis electronics unit.

12. Measuring device (4) according to any one of the preceding claims,
**characterized in that**
the receiver (30) is designed such that a set of active sections (42, 43, 45) which can be read out in parallel with respect to time is definable,
in particular wherein the radiation source (26) is configured
- to generate a bundle of differently oriented and/or spaced-apart laser measuring beams generated in parallel, and
- the sections (42, 43, 45) of the set of active sections are defined such that they are each associated with a laser measuring beam of the bundle of laser measuring beams.

13. Measuring device (4) according to any one of the preceding claims,
**characterized in that**
- the receiver (30) has a radiation-opaque blocking element for the received radiation (10) on the received radiation side,
- the blocking element is configured such that a transmission region settable in a chronologically variable manner is set to transmit the received radiation (10) to the overall detector surface of the receiver (30), wherein
- the position of the transmission region is settable with respect to the overall detector surface, in particular wherein the transmission region is furthermore settable with respect to its shape and/or its dimensions.

## Revendications

1. Appareil de mesure (4) pour la mesure optique d'un environnement, présentant :
• une source de rayonnement (26) pour générer un rayonnement d'émission (2),
• un canal d'émission pour émettre au moins une partie du rayonnement d'émission,
• un élément de déviation de rayons (38) dans le canal d'émission, qui est configuré pour dévier le rayonnement d'émission (2) et pour régler une direction d'émission (37, 39) variable dans le temps du rayonnement d'émission (2) provenant du canal d'émission,
• un canal de réception avec un récepteur (30) qui est configuré pour détecter un signal de réception sur la base d'au moins une partie du rayonnement d'émission en retour, ci-après appelé rayonnement de réception (10),
• une électronique de commande qui est configurée pour commander l'appareil de mesure (4) sur la base d'un processus de mesure préprogrammé,
• un dispositif de détermination d'angle pour détecter des données angulaires concernant la direction d'émission (37, 39) du rayonnement d'émission (2), et
• une unité de calcul (9) pour déduire des données de mesure de distance sur la base du signal de réception,
dans lequel un balayage est effectué par le processus de mesure au moyen du rayonnement d'émission (2), sur la base de
• une commande continue définie de l'élément de déviation de rayons (38) pour faire varier en continu la direction d'émission (37, 39) du rayonnement d'émission (2),
• une émission continue du rayonnement d'émission (2) et une détection continue du signal de réception, et
• une déduction des données de mesure de distance,
dans lequel
• le récepteur (30) présente un capteur optoélectronique (36) basé sur un agencement de microcellules pour détecter le signal de réception,
• le capteur (36) présente une pluralité de microcellules et est configuré de telle sorte que les microcellules peuvent être lues individuellement et/ou en groupes de microcellules et qu'il est ainsi possible de régler des zones partielles actives (42, 43, 45) du récepteur (30) pouvant être lues individuellement, et
• dans le cadre du processus de mesure, la commande de l'élément de déviation de rayons (38) et la détection du signal de réception sont synchronisées de telle sorte que
o la détection du signal de réception s'effectue sur la base d'une zone partielle active (42, 43, 45) du récepteur (30), dans lequel
o la zone partielle active (42, 43, 45) est réglée sur la base des données angulaires définissant la direction d'émission (37, 39) du rayonnement d'émission (2) et/ou sur la base de données de mesure de distance,
**caractérisé en ce que**
• l'appareil de mesure (4) présente un dispositif de mesure d'inertie qui est configuré pour détecter des données d'inertie concernant un mouvement propre de l'appareil de mesure (4), à savoir un basculement, et
• la zone partielle active (42, 43, 45) utilisée dans le cadre du processus de mesure est sélectionnée sur la base des données d'inertie.

2. Appareil de mesure (4) selon la revendication 1,
**caractérisé en ce que**
l'appareil de mesure (4) est configuré
• pour détecter une évolution dans le temps du mouvement propre de l'appareil de mesure (4), et
• pour estimer à l'avance le mouvement propre de l'appareil de mesure (4) sur la base de l'évolution dans le temps,
la zone partielle active (42, 43, 45) utilisée dans le cadre du processus de mesure étant sélectionnée sur la base du mouvement propre estimé de l'appareil de mesure (4),
en particulier en tenant compte d'une évolution dans le temps des données de mesure de distance initialement déduites.

3. Appareil de mesure (4) selon l'une des revendications précédentes, **caractérisé en ce que**
l'appareil de mesure (4) est configuré
• pour déduire une position d'incidence (46) du rayonnement de réception (2) sur le capteur (36), en particulier au moyen d'une détermination de centre de gravité ou d'une détermination de maximum du signal de réception détecté, et
• pour déduire, sur la base de la position d'incidence (46) et des données de mesure de distance, une information de correction concernant les données angulaires.

4. Appareil de mesure (4) selon l'une des revendications précédentes, **caractérisé en ce que**
l'appareil de mesure (4) est configuré pour estimer, sur la base des données angulaires, une première information de représentation pour une forme de rayon et/ou une position du rayonnement de réception (10) représenté sur le capteur (36), en particulier sur la base d'une optique à foyer fixe définie du canal de réception, la zone partielle active (42, 43, 45) utilisée dans le cadre du processus de mesure étant sélectionnée sur la base de la première information de représentation estimée.

5. Appareil de mesure (4) selon l'une des revendications précédentes, **caractérisé en ce que**
l'appareil de mesure (4) est configuré
• pour estimer, sur la base d'un retour d'information du capteur (36) concernant un signal de réception précédemment détecté, une deuxième information de représentation pour une forme de rayon et/ou une position du rayonnement de réception (10) représenté sur le capteur (36),
la zone partielle active (42, 43, 45) utilisée dans le cadre du processus de mesure étant sélectionnée sur la base de la deuxième information de représentation estimée.

6. Appareil de mesure (4) selon l'une des revendications précédentes, **caractérisé en ce que**
l'appareil de mesure (4) est configuré
• pour estimer, sur la base des données de mesure de distance, une troisième information de représentation pour une forme de rayon et/ou une position du rayonnement de réception (10) représenté sur le capteur (36),
la zone partielle active (42, 43, 45) utilisée dans le cadre du processus de mesure étant sélectionnée sur la base de la troisième information d'imagerie estimée.

7. Appareil de mesure (4) selon l'une des revendications précédentes, **caractérisé en ce que**
le canal de réception est configuré de telle sorte que l'effet de formation d'image du canal de réception est sensiblement indépendant de la commande de l'élément de déviation de rayons (38), en particulier l'élément de déviation de rayons (38) étant disposé de telle sorte qu'il agit uniquement sur le rayonnement d'émission (2).

8. Appareil de mesure (4) selon l'une des revendications 1 à 6, **caractérisé en ce que**
• le canal de réception est configuré de telle sorte que l'effet de formation d'image du canal de réception dépend de la commande de l'élément de déviation de rayons (38), qui est disposé de manière à agir sur le rayonnement de réception (10) de sorte qu'un premier angle de déviation du rayonnement d'émission (2) et un deuxième angle de déviation du rayonnement de réception (10) soient obtenus en fonction de la commande de l'élément de déviation de rayons (38), et
• l'appareil de mesure (4) est configuré pour estimer une différence angulaire entre le premier et le deuxième angle de déviation sur la base d'une estimation de la différence de temps entre l'instant du passage de l'élément de déviation de rayons (38) par le rayonnement d'émission (2) et l'instant du passage de l'élément de déviation de rayons (38) par le rayonnement de réception (10) associé,
dans lequel la zone partielle active (42, 43, 45) utilisée dans le cadre du processus de mesure est réglée sur la base de la différence angulaire estimée.

9. Appareil de mesure (4) selon la revendication 8,
**caractérisé en ce que**
la différence angulaire est estimée sur la base d'au moins un des éléments suivants :
• une distance par rapport à un objet cible dans l'environnement, en particulier sur la base de données de mesure de distance initialement détectées,
• un taux de réglage de la direction d'émission variable dans le temps (37, 39),
• un modèle de balayage (3) défini par le processus de mesure pour le balayage par balayage au moyen de l'élément de déviation de rayons (38), et
• le mouvement propre de l'appareil de mesure (4).

10. Appareil de mesure (4) selon l'une des revendications 8 à 9, **caractérisé en ce que**
la différence angulaire est estimée sur la base d'une estimation de tendance effectuée en continu sur la base des différences angulaires estimées jusqu'à présent, en particulier sur la base des trois dernières différences angulaires immédiatement précédentes.

11. Appareil de mesure (4) selon l'une des revendications précédentes, **caractérisé en ce que**
le récepteur (30) présente plusieurs capteurs (36), lesdits plusieurs capteurs étant disposés de manière unidimensionnelle ou bidimensionnelle les uns par rapport aux autres, en particulier chaque capteur (36) présentant une électronique de commande et/ou une électronique d'évaluation séparée.

12. Appareil de mesure (4) selon l'une des revendications précédentes, **caractérisé en ce que**
le récepteur (30) est conçu de telle sorte qu'un ensemble de zones partielles actives (42, 43, 45) pouvant être lues en parallèle dans le temps peut être défini,
la source de rayonnement (26) étant en particulier configurée
• pour générer un faisceau de rayons laser de mesure générés en parallèle, orientés différemment et/ou espacés, et
• les zones partielles (42, 43, 45) de l'ensemble de zones partielles actives sont définies de manière à être associées chacune à un rayon laser de mesure du faisceau de rayons laser de mesure.

13. Appareil de mesure (4) selon l'une des revendications précédentes, **caractérisé en ce que**
• le récepteur (30) présente, côté rayonnement de réception, un élément de blocage opaque au rayonnement pour le rayonnement de réception (10),
• l'élément de blocage est configuré de telle sorte qu'une zone de passage réglable de manière variable dans le temps est réglée pour laisser passer le rayonnement de réception (10) vers la surface de détection totale du récepteur (30), dans lequel
• la position de la zone de passage par rapport à la surface de détection totale est réglable, la zone de passage étant en outre réglable en particulier concernant sa forme et/ou son étendue.
